# EUROPÄISCHE PATENTSCHRIFT

(11) **EP 3 352 111 B1**
(45) Veröffentlichungstag und Bekanntmachung des Hinweises auf die Patenterteilung: **11.08.2021**
(21) Anmeldenummer: 18151988.5
(22) Anmeldetag: 17.01.2018
(51) Int. Cl.: G06K 9/00, G06K 9/62

(54) **VERFAHREN ZUM ERKENNEN VON KRITISCHEN EREIGNISSEN**
METHOD FOR IDENTIFYING CRITICAL EVENTS
PROCÉDÉ DE DÉTECTION D'ÉVÉNEMENTS CRITIQUES

(30) Priorität: 24.01.2017 AT 500442017; 24.01.2017 AT 500462017
(43) Veröffentlichungstag der Anmeldung: 25.07.2018
(73) Patentinhaber: AIT Austrian Institute of Technology GmbH, 1220 Wien (AT)
(72) Erfinder: WIESMEYR, Christoph, 1020 Wien (AT); GARN, Heinrich, 1220 Wien (AT); LITZENBERGER, Martin, 2460 Bruck an der Leitha (AT); HUBNER, Michael, 1050 Wien (AT)
(74) Vertreter: Wildhack & Jellinek

(56) Entgegenhaltungen:
- AHMED DEWAN TANVIR ET AL: "Utility based decision support engine for camera view selection in multimedia surveillance systems", MULTIMEDIA TOOLS AND APPLICATIONS, KLUWER ACADEMIC PUBLISHERS, BOSTON, US, Bd. 73, Nr. 1, 16. Dezember 2012 (2012-12-16), Seiten 219-240, XP035396050, ISSN: 1380-7501, DOI: 10.1007/S11042-012-1294-7 [gefunden am 2012-12-16]
- JIANGFAN FENG ET AL: "Survey on Modeling and Detection Events in Georeferenced Multimedia Fusion", RECENT PATENTS ON COMPUTER SCIENCE, Bd. 9, 1. Januar 2016 (2016-01-01), Seiten 241-247, XP055484078, DOI: 10.2174/22132759089991507221659
- Jürgen Bohn ET AL: "Robust probabilistic positioning based on high-level sensor-fusion and map knowledge", Technical Report No. 421, 18. April 2003 (2003-04-18), XP055484083, DOI: 10.3929/ethz-a-006714680 Gefunden im Internet: URL:https://www.research-collection.ethz.c h/bitstream/handle/20.500.11850/68776/eth- 4618-01.pdf?sequence=1&isAllowed=y [gefunden am 2018-06-13]
- KOOIJ J F P ET AL: "Multi-modal human aggression detection", COMPUTER VISION AND IMAGE UNDERSTANDING, ACADEMIC PRESS, US, Bd. 144, 1. April 2016 (2016-04-01), Seiten 106-120, XP029400283, ISSN: 1077-3142, DOI: 10.1016/J.CVIU.2015.06.009

## Beschreibung

Die Erfindung betrifft ein Verfahren zum Erkennen von kritischen Ereignissen, die zu einem bestimmten Detektionszeitpunkt auftreten.

Insbesondere betrifft die Erfindung ein Verfahren zur Detektion von sicherheitskritischen Ereignissen an zu überwachenden Bereichen auf öffentlichen Plätzen, die zu einem bestimmten Detektionszeitpunkt auftreten.

In Ahmed Dewan Tanvir et al.: "Utility based decision support engine for camera view selection in multimedia surveillance systems", Multimedia Tools and Applications, Kluwer Academic Publishers, Boston, US, Bd. 73, Nr. 1, 16. Dezember 2012, Seiten 219-240, XP035396050, ISSN: 1380-7501, DOI: 10.1007/S11042-012-1294-7, ist ein Verfahren zur Auswahl von Kameraansichten für ein Überwachungssystem bekannt, bei dem utility values basierend auf automatisiert detektierten Events in verschiedenen Überwachungszonen, Zusammenhängen zwischen den Events und operator Feedback ermittelt werden. Für einzelne Überwachungszonen und einzelne Kameraansichten wird dabei jeweils ein eigener utility value berechnet.

Aus dem Stand der Technik sind unterschiedliche Vorgehensweisen bekannt, mit denen es möglich ist, einzelne kritische Ereignisse mit einer Vielzahl unterschiedlicher Sensoren zu detektieren. Dabei werden die einzelnen Messwerte dieser Sensoren, wie z.B. Kameras, Schallsensoren, Wärmesensoren, Strahlungssensoren etc., ausgewertet und durch unterschiedliche Rechenoperationen miteinander verknüpft. Als Ergebnis der Verknüpfung wird ein Wert erstellt, der angibt, mit welcher Wahrscheinlichkeit bzw. mit welcher Intensität ein kritisches Ereignis aufgetreten ist.

Die Erfindung hat die Aufgabe, ein solches eingangs genanntes Verfahren in mehrerlei Hinsicht zu verbessern:
Zum einen nehmen die aus dem Stand der Technik bekannten Verfahren auf den zeitlichen Verlauf der einzelnen Sensormesswerte nur bedingt Rücksicht, sodass Messartefakte vermehrt zur Detektion kritischer Ereignisse führen. Darüber hinaus setzt sich die Erfindung auch zur Aufgabe, einen robusten konsistenten Algorithmus zur Verfügung zu stellen, mit dem einzelne bewegte Objekte wie Personen oder Fahrzeuge sowie deren Bewegung lokalisiert und auf das Auftreten kritischer Ereignisse hin untersucht werden kann. Gerade bei Multisensoranwendungen bestehen oft Probleme hinsichtlich der Datenrepräsentation sowie der vorteilhaften Weiterverarbeitung der Daten. Die Erfindung löst all die genannten Probleme bei einem Verfahren der eingangs genannten Art mit den Merkmalen des Patentanspruchs 1.

Erfindungsgemäß ist bei einem Verfahren zur Detektion von zu einem bestimmten Detektionszeitpunkt auftretenden sicherheitskritischen Ereignissen an zu überwachenden Bereichen auf öffentlichen Plätzen vorgesehen,
a) wobei mit einzelnen Sensoren Sensormesswerte ermittelt werden, und mehrere Ereigniskarten mit jeweils einer Anzahl von Knoten erstellt werden, wobei jeder der Knoten oder eine Vielzahl der Knoten zumindest einer Ereigniskarte einem Bereich im Messbereich zumindest eines der Sensoren zugeordnet ist,
b) wobei eine gemeinsame Karte mit einer Anzahl von Knoten vorgegeben wird, wobei jeder der Knoten oder eine Vielzahl der Knoten der gemeinsamen Karte einem Bereich im Messbereich zumindest eines der Sensoren zugeordnet ist, wobei die Knoten der gemeinsamen Karte oder der Ereigniskarten rasterförmig, insbesondere in einem Raster mit Zeilen und Spalten, angeordnet werden,
c) wobei vorab für jede der einzelnen Ereigniskarten jeweils eine Abbildung auf die gemeinsame Karte vorgegeben wird,
   die insbesondere Messwerte betreffend denselben Messbereich auf dieselben Knoten der gemeinsamen Karte abbildet, und/oder Messwerte betreffend benachbarte Messbereiche auf benachbarte Knoten der gemeinsamen Karte abbildet
d) wobei für eine Vielzahl von Aufnahmezeitpunkten oder Aufnahmezeitspannen jeweils aufgrund der ermittelten Sensormesswerte eines oder mehrerer Sensoren nach vorgegebenen Kriterien Ereignisse erstellt werden, wobei im Falle der Erstellung eines Ereignisses ermittelt oder festgelegt wird,
   - der Aufnahmezeitpunkt oder eine Aufnahmezeitspanne
   - für jeden Knoten der Ereigniskarte ein dem Ereignis zugeordneter Intensitätswert,
   - eine Abklingfunktion zur Festlegung eines zeitlichen Abklingverhaltens aufgrund der Art des Ereignisses, wobei die Abklingfunktion bei Überschreitung einer vorgegebenen Zeitspanne einen vorgegebenen Neutralwert aufweist oder gegen diesen Neutralwert konvergiert,
e) wobei für den Detektionszeitpunkt sowie für eine Anzahl von Knoten der gemeinsamen Karte knotenweise ein Ereigniswert bestimmt wird, indem
   die einzelnen Intensitätswerte aller Ereignisse betreffend denjenigen Knoten der Ereigniskarte, die aufgrund der Abbildung auf den betreffenden Knoten der gemeinsamen Karte abgebildet oder für eine Interpolation herangezogen werden, oder von diesen Werten abgeleitete Beiträge mit einer Akkumulationsvorschrift gewichtet akkumuliert werden, bei der die Akkumulation des Neutralwerts keinen Beitrag zum Akkumulationsergebnis liefert, und derart der Ereigniswert für den betreffenden Detektionszeitpunkt ermittelt wird,
f) wobei die Intensitätswerte oder die Beiträge, die die Intensitätswerte von Ereignissen zur Akkumulation liefern, bei der Erstellung des Ereigniswerts im Zuge der Akkumulation jeweils mit einem Wert gewichtet werden, der dem Ergebnis der Anwendung der Abklingfunktion des jeweiligen Ereignisses auf die Zeitspanne zwischen dem Detektionszeitpunkt und dem Aufnahmezeitpunkt oder einem Zeitpunkt innerhalb der Aufnahmezeitspanne des Ereignisses entspricht, und
g) wobei für den Fall, dass ein Ereigniswert in der gemeinsamen Karte einen vorgegebenen Schwellenwert übersteigt, ein kritisches Ereignis im betreffenden Knoten der gemeinsamen Karte sowie in dem diesem Knoten zugeordneten Bereich im Messbereich eines der Sensoren festgestellt, und wobei für einzelne Knoten der Ereigniskarten jeweils unterschiedliche Schwellenwerte vorgegeben werden und
   - mehrere Ereigniskarten überlappend ausgebildet sind, sodass zumindest zwei Knoten von zwei unterschiedlichen Ereigniskarten jeweils auf denselben Knoten der gemeinsamen Karte abgebildet werden.

Dadurch, dass die Knoten der gemeinsamen Karte oder der Ereigniskarten rasterförmig, insbesondere in einem Raster mit Zeilen und Spalten, angeordnet werden, ist eine einfache grafische Darstellbarkeit der gemeinsamen Karte möglich.

Dadurch, dass für einzelne Knoten der Ereigniskarten jeweils unterschiedliche Schwellenwerte vorgegeben werden, ist es vorteilhafterweise möglich, einzelne Regionen unterschiedlich zu behandeln bzw. Ereignisse in diesen Regionen stärker oder schwächer zu gewichten.

Zur Erstellung einer besonders aussagekräftigen gemeinsamen Karte basierend auf einer Vielzahl von Ereigniskarten ist vorgesehen, dass mehrere Ereigniskarten überlappend ausgebildet sind, sodass zumindest zwei Knoten von zwei unterschiedlichen Ereigniskarten jeweils auf denselben Knoten der gemeinsamen Karte abgebildet werden.

Die Zuordnung in Schritt a) kann insbesondere erfolgen, indem
i) zumindest eine erste Ereigniskarte ausgehend von den Sensormesswerten von zumindest einem Mikrophonpaar oder zwei gemeinsam in vorgegebenem Abstand angeordneten Mikrophonpaaren erstellt wird, wobei den Knoten der ersten Ereigniskarte jeweils ein Messwert zugewiesen wird, der der Wahrscheinlichkeit entspricht, dass von der betreffenden Stelle ein Geräusch ausgeht,
ii) zumindest eine zweite Ereigniskarte ausgehend von den Sensormesswerten von zumindest einer Kamera oder zwei Kameras erstellt wird, wobei den Knoten dieser zweiten Ereigniskarte jeweils ein Messwert zugewiesen wird, der der Wahrscheinlichkeit entspricht, dass sich an der betreffenden Stelle zumindest eine Person befindet.

Eine besonders einfach implementierbare Ausführungsform der Erfindung sieht vor, dass für alle Ereignisse derselben Ereigniskarte jeweils die gleiche Abklingfunktion verwendet wird, wobei insbesondere für unterschiedliche Ereigniskarten untereinander unterschiedliche Abklingfunktionen verwendet werden.

Eine weitere alternative Ausführungsform der Erfindung, die es ermöglicht, unterschiedliches Abklingverhalten für unterschiedliche Sensormesswerte vorzugeben, sieht vor, dass in einem ersten Schritt
- für alle Knoten der Ereigniskarten knotenweise Ereigniswerte gebildet werden, indem die einzelnen Intensitätswerte vom selben Knoten der Ereigniskarte mit einer vorgegebenen Akkumulationsvorschrift gewichtet akkumuliert werden und derart der Ereigniswert ermittelt wird,
- die Intensitätswerte jeweils mit einem Wert gewichtet werden, der dem Ergebnis der Anwendung der Abklingfunktion auf die Zeitspanne zwischen dem Aufnahmezeitpunkt oder der Aufnahmezeitspanne des Ereignisses und dem Detektionszeitpunkt entspricht, und in einem zweiten Schritt die einzelnen Ereigniswerte von denjenigen Knoten der Ereigniskarte, die aufgrund der Abbildung auf den betreffenden Knoten der gemeinsamen Karte abgebildet oder für eine Interpolation herangezogen werden, mit derselben Akkumulationsvorschrift gewichtet akkumuliert werden und derart der Ereigniswert ermittelt wird.

Gemäß einer Variante eines erfindungsgemäßen Verfahrens kann vorgesehen sein, dass jede Ereigniskarte jeweils in zumindest einem Knoten mit einer anderen Ereigniskarte überlappt, sodass für jede Ereigniskarte zumindest ein Knoten besteht, der auf den selben Knoten der gemeinsamen Karte abgebildet ist, wie zumindest ein Knoten einer anderen Ereigniskarte.

Um einzelne Sensormesswerte einzelner Sensoren nach unterschiedlichen Kriterien mehrfach zu behandeln und zu gewichten, kann vorgesehen sein, dass die Sensormesswerte zumindest eines Sensors bei der Bildung einer Mehrzahl von Ereigniskarten herangezogen werden.

Bevorzugte Abklingfunktionen, mit denen stabile Abklingverhalten für einzelne auftretende Intensitätswerte erzielt werden können, sehen vor, dass als Abklingfunktion eine Funktion verwendet wird,
- die für eine vorgegebene Zeitspanne nach dem Aufnahmezeitpunkt oder der Aufnahmezeitspanne einen vorgegebenen Wert aufweist und daran anschließend den Neutralwert aufweist, und/oder
- für eine vorgegebene Zeitspanne nach dem Aufnahmezeitpunkt oder der Aufnahmezeitspanne einen ausgehend von einem vorgegebenen Maximalwert monoton, insbesondere linear, abfallenden Wert aufweist und daran anschließend den Neutralwert aufweist, und/oder
- nach dem Aufnahmezeitpunkt oder der Aufnahmezeitspanne einen ausgehend von einem vorgegebenen Maximalwert monoton exponentiell abfallenden Wert aufweist, der gegen den Neutralwert konvergiert.

Zusätzlich oder alternativ kann zum selben Zweck vorgesehen sein, dass für alle die Abklingfunktionen eine maximale Abklingzeit vorgegeben wird, nach der der Wert der Abklingfunktionen dem Neutralwert entspricht, und/oder
dass für die Akkumulation ausschließlich Ereignisse herangezogen werden, deren Aufnahmezeitpunkt oder Aufnahmezeitspanne weniger als diese Abklingzeit vor dem Detektionszeitpunkt liegt.

Ein besonders einfaches Abklingverhalten, das sämtliche auftretende Intensitätswerte gleich bewertet, sieht vor, dass bei Vorliegen eines Ereignisses den Knoten einer Ereigniskarte jeweils ein Intensitätswert zugeordnet wird, wobei diese Intensitätswerte entsprechend der jeweiligen Transformation zu den Ereigniswerten der betreffenden Knoten der gemeinsame Ereigniskarte hinzugezählt werden, wobei die Ereigniswerte auf der gemeinsamen Ereigniskarte nach der Zeit mit einer vorgegebenen Halbwertszeit exponentiell abklingen.

Um Pfade, die einzelne Personen oder Gegenstände in dem zu überwachenden Bereich nehmen, vorteilhaft lokalisieren und mit kritischen Ereignissen verknüpfen zu können, kann vorgesehen sein, dass für die Erstellung einer der Ereigniskarten ein Sensor zur Verfolgung von Personen oder Gegenständen verwendet wird, wobei für einzelne Personen ein Pfad in Bezug auf die Ereigniskarte festgelegt wird und für einzelne Knoten, die sich innerhalb einer Umgebung um den Pfad befinden ein Ereigniswert vorgegeben oder erhöht wird.

Bevorzugt können zur Erstellung von Ereigniskarten die folgenden Sensoren verwendet werden:
- Mikrofone, Richtmikrofone, Bodenvibrationssensoren
- Kameras, Wärmebildkamera
- Tür- und Fensterkontakte
- Glasbruchsensoren
- Bewegungsmelder
- WLAN und Bluetooth-Baken
- Mikrowellen-Radar
- ODTR-Sensoren.

Besonders vorteilhaft kann zur Detektion von Personen im Überwachungsbereich vorgesehen sein, dass in Schritt i) zur Erstellung der zweiten Ereigniskarte Wärmebildkameras oder Kameras verwendet werden, die für den sichtbaren Bereich sensitiv sind,
dass für das jeweilige Kamerabild beider Kameras eine Transformation in die zweite Ereigniskarte vorgegeben wird, wobei gemeinsame Aufnahmebereiche der Kameras auf gemeinsame Knoten abgebildet werden, und
dass die Ereigniswerte für jeden Knoten mittels eines Bildanalyseverfahrens ermittelt werden, das die Wahrscheinlichkeit des Auftretens einer Person im Kamerabild angibt.

Weiters kann zur Lokalisation von Personen mittels akustischer Sensoren vorgesehen sein, dass in Schritt ii) aufgrund der Laufzeitunterschiede der von den einander zugeordneten Mikrophonen eine räumliche Lokalisierung der empfangenen Geräusche vorgenommen wird und wobei den Knoten der ersten Ereigniskarte jeweils ein Intensitätswert oder Ereigniswert zugewiesen wird, der der Wahrscheinlichkeit entspricht, dass von der betreffenden Stelle ein Geräusch ausgeht.

Um vorteilhaft kritische Ereignisse detektieren zu können, die mit dem Auftreten typischer ereignisbedingter Geräusche im Zusammenhang stehen, kann vorgesehen sein, dass für die Erstellung von Ereignissen ein Übereinstimmungsmaß bestimmt wird, das angibt, inwieweit das ermittelte Geräusch mit einem oder mehreren Referenzgeräuschen übereinstimmt oder diesem ähnlich ist und wobei den Knoten für das betreffende Ereignis jeweils ein Intensitätswert zugewiesen wird, der der Wahrscheinlichkeit entspricht, dass von der betreffenden Stelle ein mit dem Referenzgeräusch übereinstimmendes Geräusch ausgeht,
wobei der Intensitätswert insbesondere mit der Intensität des Geräuschs gewichtet wird, wobei gegebenenfalls die durch den Abstand des dem Knoten zugewiesenen Bereichs zum Mikrophon bewirkte Schwächung des Signals kompensiert wird.

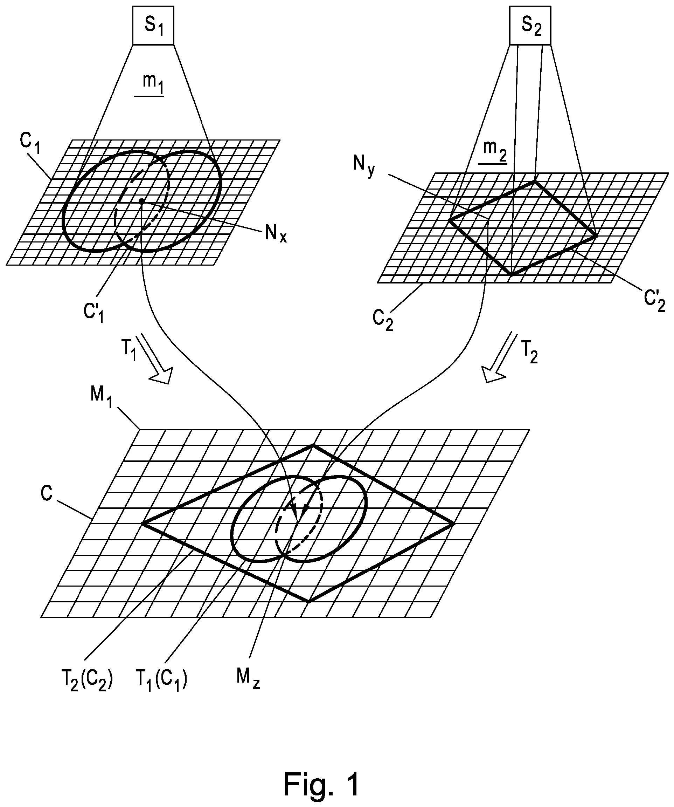

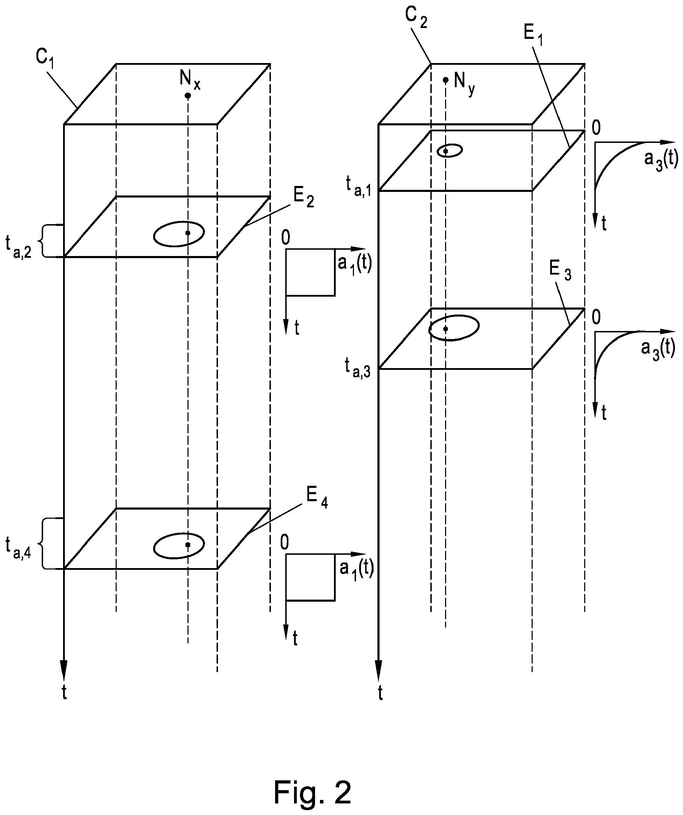

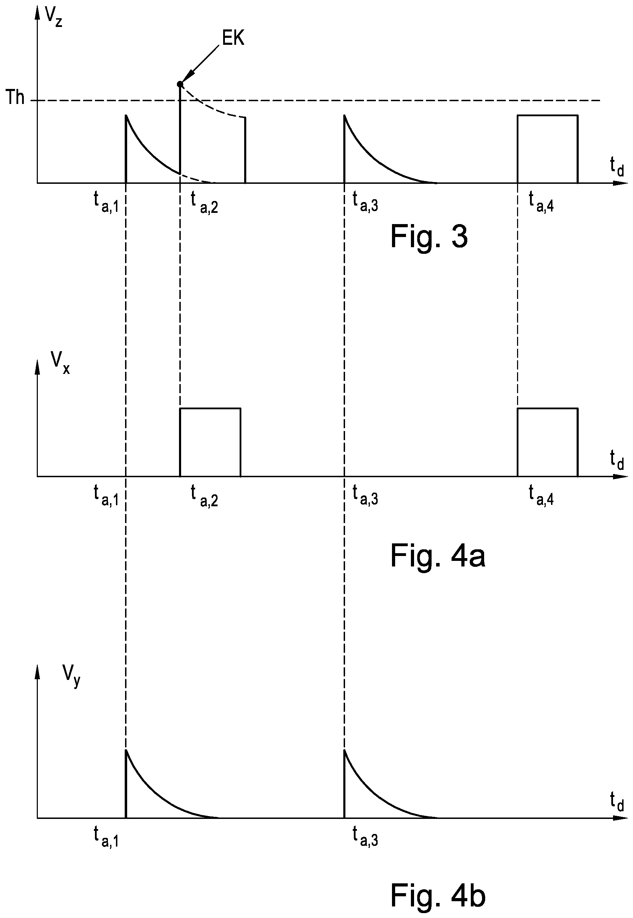

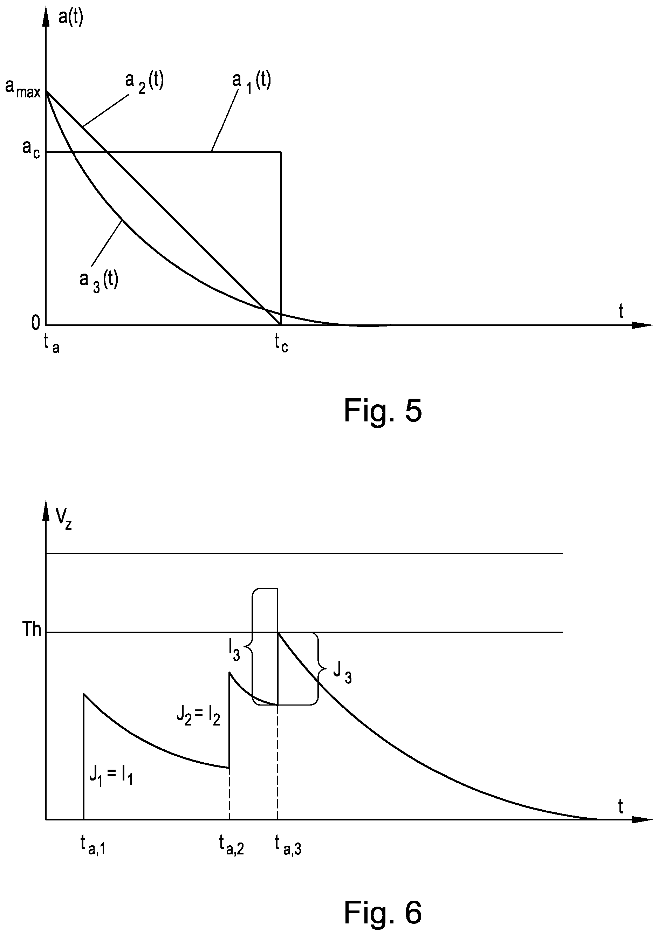

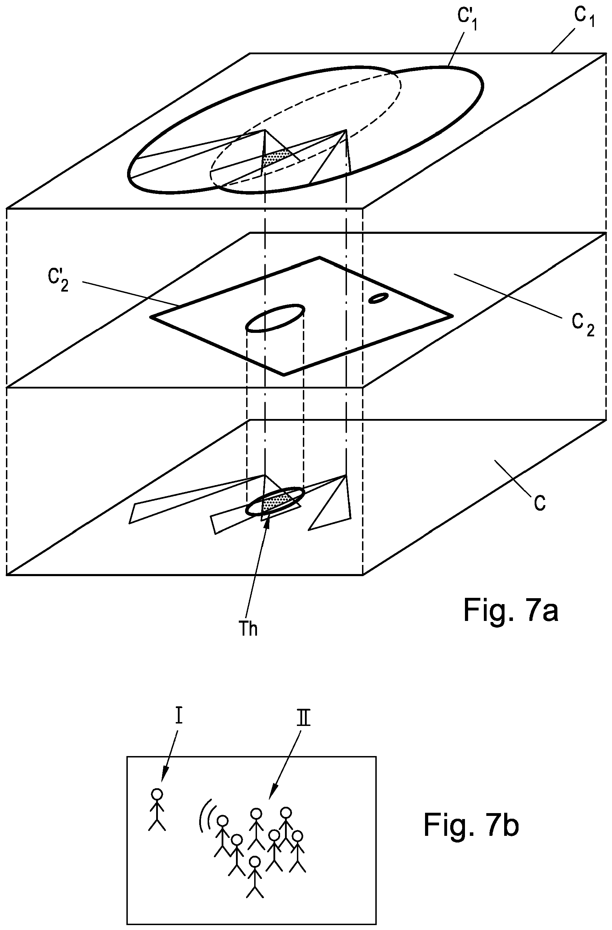

**Fig. 1** zeigt zwei Sensoren, die Messwerte erstellen sowie die Übertragung dieser Messwerte in Ereigniskarten bzw. eine gemeinsame Karte. **Fig. 2** zeigt die Weiterverarbeitung von Ereignissen bzw. auftretenden Intensitätswerten über die Zeit. **Fig. 3** zeigt die einzelnen in der gemeinsamen Karte auftretenden Ereigniswerte sowie die Detektion eines kritischen Ereignisses. Die **Fig. 4a und 4b** zeigen die einzelnen Ereigniswerte, die sich durch Akkumulation in der ersten bzw. in der zweiten Ereigniskarte ergeben. **Fig. 5** zeigt eine Vielzahl unterschiedlicher möglicher Abklingverhalten. **Fig. 6** zeigt eine mögliche, alternative Ausbildung der Erfindung mit unterschiedlichen Vorgaben zur Bestimmung des Abklingverhaltens. **Fig. 7a** zeigt eine konkrete Anwendung eines erfindungsgemäßen Verfahrens zur Erkennung kritischer Ereignisse bei größeren Menschenansammlungen im öffentlichen Raum. **Fig. 7b** zeigt ein im Zuge dieser Anwendung aufgenommenes Digitalbild von einem Bildsensor.

In **Fig. 1** sind Sensoren S₁, S₂ dargestellt, die jeweils zu vorgegebenen Zeitpunkten laufend, dh immer wiederkehrend, Sensormesswerte m₁, m₂ liefern. Im vorliegenden Ausführungsbeispiel handelt es sich bei den Sensoren S₁, S₂ um eine Kamera S₂ einerseits sowie zwei gemeinsam in vorgegebenem Abstand angeordneten Mikrophonpaaren S₁ andererseits.

Die Kamera S₂ liefert Sensormesswerte in Form von Digitalbildern. Bei der Kamera S₂ kann es sich um eine Wärmebildkamera oder eine Kamera handeln, die für den sichtbaren Bereich sensitiv ist.

Die beiden Mikrophonpaare S₁ liefern - nach Vornahme von Nachbearbeitungsschritten - Sensormesswerte als Geräuschverteilung in Form eines Geräuschbilds, wobei den Bildbereichen bzw. Pixeln des Geräuschbilds jeweils Intensitätswerte zugewiesen werden, die der Wahrscheinlichkeit entsprechen, dass von einer bestimmten Stelle im Aufnahmebereich beider Mikrophonpaare S₁ ein Geräusch ausgeht. Die konkrete Erstellung der Geräuschbilder ist beispielsweise in Friedlander, B.: A passive localization algorithm and its accuracy analysis. In: Oceanic Engineering, IEEE Journal of 12 (1987), Nr. 1, S. 234-245 näher beschrieben. Dabei wird aufgrund der Laufzeitunterschiede der von den einander zugeordneten Mikrophonen eine räumliche Lokalisierung der empfangenen Geräusche vorgenommen.

Da nicht alle Geräusche gleich kritisch sind, kann für die Erstellung von Ereignissen E₁, E₂, E₃, E₄ ein Übereinstimmungsmaß bestimmt werden, das angibt, inwieweit ein ermitteltes Geräusch mit einem oder mehreren Referenzgeräuschen übereinstimmt oder diesem ähnlich ist. Dieses Übereinstimmungsmaß kann beispielsweise ein Ereignis in einer weiteren Ereigniskarte darstellen, das Intensitätswerte innerhalb eines Radius um das Mikrophon aufweist, die der Reichweite des Mikrophons entsprechen. Die einzelnen Messwerte werden dabei letztlich auf eine Vielzahl von Knoten verteilt.

### Sensoren

Die Art der verwendeten Sensoren S₁, S₂ ist grundsätzlich frei festlegbar und an die zu erkennenden kritischen Ereignisse anpassbar. Im Rahmen der Erfindung können auch akustische Sensoren wie etwa Mikrofone, Richtmikrofone, Bodenvibrationssensoren oder ODTR-Sensoren eingesetzt werden, um akustische Vorgänge zu erkennen, die auf kritische Ereignisse hindeuten.

Daneben besteht, wie bereits erwähnt, die Möglichkeit, dass Kameras S₂ mit unterschiedlicher Sensitivität für einzelne Wellenlängenbereiche eingesetzt werden. Typisch sind in diesem Zusammenhang Kameras S₂ mit Sensitivität für den sichtbaren Bereich, wobei normalerweise Graustufenkameras sowie RGB-Farbkameras eingesetzt werden. Daneben können jedoch auch andere Kameras S₂ wie beispielsweise Infrarotkameras oder Wärmebildkameras eingesetzt werden.

Weiters können für die Detektion von Ereignissen, die sich auf bestimmte Gebäude beziehen auch Tür- und Fensterkontakte oder Glasbruchsensoren verwendet werden. Sofern die Bewegungen von Personen, Fahrzeugen oder Tieren zu beobachten sind, können im Rahmen der Erfindung auch Bewegungsdetektoren bzw Bewegungsmelder eingesetzt werden.

Sofern davon auszugehen ist, dass einzelne Personen oder Gegenstände elektronisch mit ihrer Umgebung kommunizieren, können zur Bestimmung von Personen und von von diesen Personen zurückgelegten Pfaden auch Sensoren verwendet werden, die die Kommunikation mittels WLAN- und Bluetooth feststellen.

Schließlich besteht auch die Möglichkeit, zur Detektion von Personen, Tieren oder Sachen Mikrowellen-Radar als Sensor einzusetzen, wobei mit einem derartigen Sensor eine räumliche Intensitätsverteilung ermittelbar ist.

### Ereigniskarte

Sämtliche der erzielten Messwerte werden, wie in **Fig. 1** dargestellt, auf im Folgenden näher erörterte Ereigniskarten C₁, C₂ projiziert. Die in **Fig. 1** dargestellten Ereigniskarten C₁, C₂ weisen im Wesentlichen die Form eines zweidimensionalen Arrays von Werten auf, das auch als Digitalbild mit einer Vielzahl von Kanälen interpretiert werden kann. Die einzelnen Knoten Nₓ, N_{y} sind dabei in einem zweidimensionalen regelmäßigen und durch zwei Koordinatenwerte festlegbaren Positionen, insbesondere rasterförmig mit einem Raster mit Zeilen und Spalten, angeordnet. Den einzelnen Knoten Nₓ, N_{y} der Ereigniskarten C₁, C₂ können jeweils, gegebenenfalls in mehreren Kanälen, Werte zugewiesen werden.

Zumindest eine Vielzahl der Knoten Nₓ, N_{y} insbesondere jeder der Knoten Nₓ, N_{y} der Ereigniskarten C₁, C₂ ist zumindest einem Bereich im Messbereich zumindest eines der Sensoren S₁, S₂ zugeordnet ist. Im vorliegenden Ausführungsbeispiel sind die einzelnen Geräuschmesswerte m₁ des Geräuschsensors bzw der zwei Mikrophonpaare S₁ jeweils einem Messbereich zugeordnet, in Bezug auf den der jeweilige Geräuschmesswert festgelegt ist.

Den einzelnen Messwerten m₂ der Kamera S₂ ist jeweils ein Sehstrahl bzw Sehkegel eines Pixelsensors einer Kamera S₂ zugeordnet. Der betreffende Sehstrahl bzw Sehkegel eines Pixelsensors stellt einen Teilbereich des Aufnahmebereichs der Kamera S₂ dar.

Insgesamt wird durch die Zuordnung erreicht, dass auf einzelne Knoten Nₓ, N_{y} jeweils Messwerte m₁, m₂ abgebildet werden, die einen bestimmten Messbereich eines Sensors betreffen.

Es ist dabei durchaus möglich, dass auch mehrere Sensoren S₁, S₂ Sensormesswerte m₁, m₂ für eine einzige Ereigniskarte C₁, C₂ liefern. Die Messbereiche der einzelnen Sensoren S₁, S₂ können dabei durchaus überlappen, sodass einzelnen Knoten einer Ereigniskarte C₁, C₂ mehrere Messwerte zugeordnet sein können, die vom selben Messbereich herrühren. Ebenso ist es auch möglich, dass die Sensormesswerte eines oder mehrerer Sensoren bei der Bildung einer Mehrzahl von Ereigniskarten herangezogen werden.

Insgesamt ist es nicht erforderlich, dass für die Zuordnung einzelner Sensormesswerte zum selben Knoten eine exakte Übereinstimmung des Messbereichs zwischen den die Sensormesswerte erstellenden Sensoren S₁, S₂ besteht. Es ist auch möglich, dass die demselben Knoten zugewiesenen Sensormesswerte in Bezug auf überlappende oder benachbarte Messbereiche ermittelt wurden.

Im vorliegenden Fall sind die beiden Sensoren S₁, S₂ derart positioniert, dass sie dieselbe Szene mit unterschiedlicher Sensitivität aus unterschiedlichen Raumrichtungen teilweise überlappend darstellen, sodass einzelne Messbereiche der beiden Sensoren S₁, S₂ Messwerte in Bezug auf dieselbe Szene aus unterschiedlichen Blickwinkeln zeigen. Aufgrund der Kenntnis der konkreten Ausrichtung der beiden Sensoren S₁, S₂ ist es möglich, Messwerte, die hinsichtlich desselben Aufnahmebereichs aufgenommen wurden, demselben Knoten einer Ereigniskarte zuzuordnen.

Die Zuordnung der einzelnen Messwerte zu den Aufnahmebereichen kann auch näherungsweise erfolgen. So kann beispielsweise der Aufnahmebereich eines Bildsensors einer in einem Innenraum positionierten Kamera S₂ mit demjenigen Bereich angenommen werden, den die Kamera S₂ aufnimmt, wenn sich keine Objekte im Aufnahmebereich befinden.

Es ist nicht erforderlich, dass die Sensoren für jeden einzelnen Knoten der Ereigniskarte Messwerte liefern. Derjenige Bereich der ersten Ereigniskarte C₁, für den Messwerte m₁ vorhanden sind, wird mit dem Bezugszeichen C₁' bezeichnet. Derjenige Bereich der zweiten Ereigniskarte C₂, für den Messwerte m₂ vorhanden sind, wird mit dem Bezugszeichen C₂' bezeichnet.

### Gemeinsame Karte

Im Rahmen der Erfindung werden die Ereigniskarten C₁, C₂, auf die jeweils unterschiedliche Messwerte aufgebracht wurden, zu einer gemeinsamen Karte C zusammengeführt, wobei für jede Ereigniskarte C₁, C₂ jeweils eine Abbildung T₁, T₂ vorgesehen ist, die die einzelnen Ereigniskarten C₁, C₂ auf die gemeinsamen Karte C abbildet.

Wie in **Fig. 1** dargestellt, sind die Ereigniskarten C₁, C₂ überlappend ausgebildet, sodass zumindest zwei Knoten Nₓ, N_{y} der zwei unterschiedlichen Ereigniskarten C₁, C₂ jeweils auf denselben Knoten M_{z} der gemeinsamen Karte C abgebildet werden. Diese Voraussetzung braucht jedoch nicht für alle Punkte einer Ereigniskarte C₁, C₂ und auch nicht für alle Punkte der gemeinsamen Karte C erfüllt sein.

Sofern mehrere Ereigniskarten C₁, C₂ verwendet werden, ist es von Vorteil, wenn jede dieser Ereigniskarten jeweils in zumindest einem ihrer Knoten Nₓ, N_{y} mit einer anderen Ereigniskarte überlappt, sodass für jede Ereigniskarte zumindest ein Knoten Nₓ besteht, der auf den selben Knoten M_{z} der gemeinsamen Karte C abgebildet ist wie zumindest ein Knoten N_{y} einer anderen Ereigniskarte. Insbesondere ist es dabei von Vorteil, wenn die Bilder der einzelnen Ereigniskarten unter den jeweils verwendeten Transformationen T₁, T₂ einen zusammenhängenden Bereich auf der gemeinsamen Karte C ergeben, dh dass nicht einzelne Abbilder T₁(C₁), T₂(C₂) der Ereigniskarten C₁, C₂ unter der jeweiligen Transformation Transformationen T₁, T₂ mit keinem der übrigen Abbilder T₁(C₁), T₂(C₂) der Ereigniskarten überlappen.

Wie auch die Ereigniskarten C₁, C₂, wird die gemeinsame Karte C mit einer Anzahl von Knoten M_{z} vorgegeben. Die Knoten M_{z} der gemeinsamen Karte C können bevorzugt rasterförmig, insbesondere in einem Raster mit Zeilen und Spalten, angeordnet werden.

Die einzelnen Transformationen T₁, T₂ sind dabei insbesondere derart gewählt, dass sie Messwerte betreffend denselben Messbereich oder überlappende Messbereiche auf dieselben Knoten M_{z} der gemeinsamen Karte C abbildet. Wie bereits im Zusammenhang mit den Ereigniskarten C₁, C₂ erwähnt, ist es nicht erforderlich, dass sich die demselben Knoten zugeordneten Messwerte auf einen räumlich vollkommen identischen Messbereich beziehen. Vielmehr reicht es auch aus, wenn die Messbereiche, auf die sich die Messwerte beziehen, überlappend sind oder nur geringen Abstand zueinander aufweisen.

Darüber hinaus können die Abbildungen T₁, T₂ auch eine bestimmte Stetigkeit oder Kontinuität derart aufweisen, dass Messwerte betreffend benachbarte Messbereiche auf benachbarte Knoten der gemeinsamen Karte C abgebildet werden.

Schließlich kann im Rahmen der Abbildung auf die gemeinsame Karte C auch eine Interpolation verwendet werden, da im Zusammenhang mit der Erfindung keinesfalls gefordert ist, dass die Knoten der Ereigniskarten C₁, C₂ durch die Abbildungen T₁, T₂ exakt auf Knoten der gemeinsamen Karte C abgebildet werden. Vielmehr besteht auch die Möglichkeit, dass die Werte einzelner Knoten der Ereigniskarten C₁, C₂ auf eine Mehrzahl von Knoten der gemeinsamen Karte C abgebildet werden. Umgekehrt können für die Bestimmung von Werten auf Knoten der gemeinsamen Karte C auch mehrere dem Urbild des betreffenden Knotens der Abbildungen T₁, T₂ benachbart gelegene Knoten der Ereigniskarten C₁, C₂ herangezogen werden. Hierfür können unterschiedliche aus dem Stand der Technik bekannte Interpolationsverfahren herangezogen werden.

### Ereignisdetektion

Für die im Folgenden verwendete Ereignisdetektion wird die in **Fig. 7a und 7b** dargestellte Szene näher herangezogen. Das von der Kamera S₂ erstellte Bild ist in **Fig. 7b** näher dargestellt und zeigt einerseits einen nicht als gefährlich eingeschätzten Passanten I sowie eine aufgebrachte lärmende Menschenansammlung II umfassend insgesamt sieben Personen, von denen potentiell Gefahr für den öffentlichen Raum ausgeht.

**Fig. 7a** zeigt die transformierten Ereigniskarten C₁, C₂ sowie die gemeinsame Karte C übereinander dargestellt, wobei die Ereigniskarten C₁, C₂ entsprechend den ihnen zugeordneten Transformationen T₁, T₂ bereits derart verzerrt sind, dass übereinander liegende Punkte einander aufgrund der Transformationen T₁, T₂ zugeordnet sind. Der in **Fig. 7a** senkrecht dargestellten Zylinder schneidet in den beiden Ereigniskarten C₁, C₂ sowie in der gemeinsamen Karte C diejenigen Bereiche, die von der Menschenansammlung II betroffen sind.

Im Folgenden wird unter Bezugnahme auf **Fig. 2** für einen einzigen dem Bereich der Menschenansammlung II zugeordneten Knoten M_{z} bzw den dem Knoten M_{z} zugeordneten Messbereich ermittelt, ob sich in ihm ein kritisches Ereignis EK verwirklicht. Dieses Vorgehen kann nach denselben Kriterien für alle Knoten der gemeinsamen Karte C wiederholt werden.

Dabei wird für eine Vielzahl von Aufnahmezeitpunkten t_{a,1}, t_{a,2}, t_{a,3}, t_{a,4} jeweils ermittelte Sensormesswerten m₁, m₂ eines oder mehrerer Sensoren S₁, S₂ nach Ereignissen E₁, E₂, E₃, E₄ gesucht.

Für die Detektion von Ereignissen können grundsätzlich je nach Art der verwendeten Sensoren S₁, S₂ unterschiedliche Detektionsvorschriften herangezogen werden. So ist es bei der Suche nach Ereignissen in den von der Kamera S₂ erstellten Kamerabildern möglich, mittels Pattern-Matching-Verfahren sich bewegende Personen im Kamerabild zu identifizieren. Für einzelne Punkte im Kamerabild bzw. nach Projektion auf die Ereigniskarte C₂ oder, unter Zuhilfenahme einer Transformation T₂ auf der gemeinsamen Karte C, kann die Wahrscheinlichkeit dafür ermittelt werden, ob sich eine Person in dem einem Knoten der Ereigniskarte C₂ zugeordneten Messbereich der Kamera S₂ befindet. Sofern diese Wahrscheinlichkeit einen vorgegebenen Wert übersteigt, kann für den betreffenden Zeitpunkt t_{a,1}, t_{a,2}, t_{a,3}, t_{a,4} ein Ereignis E₁, E₂, E₃, E₄ ermittelt oder festgelegt werden, wobei das betreffende Ereignis E₁, E₂, E₃, E₄ durch eine Anzahl von jeweils einem Knoten zugeordneten Intensitätswerten in seiner Intensität bewertet wird.

Ebenso kann für die einzelnen Knoten Nₓ oder Bildpunkte des Geräuschbilds bzw auf der Ereigniskarte C₁ oder, unter Zuhilfenahme Transformation T₁ auf der gemeinsamen Karte C, die Wahrscheinlichkeit dafür ermittelt werden, ob sich eine Schallquelle mit einer einen Schwellenwert übersteigenden Schallpegel in dem einem Knoten der Ereigniskarte C₁ zugeordneten Messbereich der beiden Mikrophonpaare S₁ befindet.

Der dem Ereignis jeweils zugewiesene Intensitätswert wird insbesondere mit der Intensität bzw Lautstärke des Geräuschs gewichtet. Gegebenenfalls kann auch die durch den Abstand des dem Knoten zugewiesenen Bereichs zum Mikrophon bewirkte Schwächung des Signals kompensiert werden.

Alternativ kann auch vorgesehen sein, dass wenn die Wahrscheinlichkeit, dass ein erkanntes Geräusch nicht mit dem Referenzgeräusch übereinstimmt, einen vorgegebenen Schwellenwert unterschreitet, überhaupt kein Ereignis erstellt wird.

Bevorzugt können auch einzelne Ereignisse zu vorgegebenen Zeitpunkten erstellt werden, wobei als Intensitätswerte des jeweiligen Ereignisses angegeben wird, in welcher Richtung das betreffende Richtmikrophon Geräusche empfangen hat.

Alternativ kann auch der Zeitpunkt t_{a,1}, t_{a,2}, t_{a,3}, t_{a,4} ermittelt werden, zu dem der Schallpegel der Schallquelle den betreffenden Schwellenwert überschritten hat und dieser Zeitpunkt t_{a,1}, t_{a,2}, t_{a,3}, t_{a,4} dem Ereignis zugeordnet. Dem Ereignis E₁, E₂, E₃, E₄ wird eine Anzahl von jeweils einem Knoten zugeordneten Intensitätswerten I zugeordnet, die die Intensität des Ereignisses E₁, E₂, E₃, E₄ im betreffenden dem Knoten zugeordneten Messbereich angeben.

Die Kriterien, nach denen Ereignisse E₁, E₂, E₃, E₄ erkannt und identifiziert werden, können je nach Anwendungsfall und Art des betreffenden Sensors S₁, S₂ unterschiedlich gewählt werden. Insbesondere ist es auch möglich, einzelne derselben Ereigniskarte C₁, C₂ zugewiesene Sensoren S₁, S₂ hinsichtlich ihrer Sensormesswerte m₁, m₂ miteinander zu verknüpfen.

Neben dem Aufnahmezeitpunkt t_{a,1}, t_{a,2}, t_{a,3}, t_{a,4} und den den Knoten Nₓ, N_{y} zugeordneten Intensitätswerten I wird jedem der Ereignisse E₁, E₂, E₃, E₄ zusätzlich eine Abklingfunktion zugewiesen, die angibt, über welche Zeitspanne das betreffende Ereignis E₁, E₂, E₃, E₄ in die Zukunft wirksam sein soll. So können einzelne häufige Ereignisse E₁, E₂, E₃, E₄ wie beispielsweise die Detektion von Personen relativ rasch, beispielsweise exponentiell mit einer Halbwertszeit von einer Sekunde, abklingen, während andere Ereignisse, wie insbesondere sehr laute Geräusche länger, beispielsweise konstant über ein oder zwei Sekunden, in die Zukunft wirken können und, sofern später an derselben Stelle erneut Ereignisse auftreten, eher auf kritische Ereignisse EK am betreffenden Knoten Nₓ, N_{y}, M_{z} oder Bereich hindeuten.

Die einzelnen ermittelten Sensormesswerte brauchen nicht notwendigerweise einzelnen Aufnahmezeitpunkten t_{a,1}, t_{a,2}, t_{a,3}, t_{a,4} zugeordnet sein, um ihr zeitliches Auftreten einordnen zu können. Anstelle von Aufnahmezeitpunkten können auch Aufnahmezeitspannen herangezogen werden, um die einzelnen Sensormesswerte zu den anderen Sensormesswerten zeitlich in Beziehung setzen zu können und um die Abklingvorgänge berechnen zu können.

Die Abklingfunktion legt ein zeitliches Abklingverhalten, dh die Wirkung des Ereignisses für die Zukunft bei der Feststellung von kritischen Ereignissen fest. Diese ist, wie bereits erwähnt abhängig von der Art des jeweiligen Ereignisses E₁, E₂, E₃, E₄. Die Abklingfunktion weist bei Überschreitung einer vorgegebenen Zeitspanne t_{c} nach dem Zeitpunkt tₐ des jeweiligen Ereignisses einen vorgegebenen Neutralwert, im vorliegenden Fall 0, auf. Ist ein konvergentes Abklingverhalten gewünscht, kann die Abklingfunktion auch gegen diesen Neutralwert, im vorliegenden Fall 0, konvergieren.

Typische Abklingfunktionen sind in **Fig. 5** näher dargestellt:
Eine erste Art von Abklingfunktion a₁(t) ist für eine Zeitspanne zwischen dem dem Zeitpunkt tₐ des jeweiligen Ereignisses und einem Endzeitpunkt t_{c} konstant und hat den Wert a_{c}. Nach Ablauf dieser Zeitspanne hat sie den Neutralwert 0.
Eine zweite Art von Abklingfunktion a₂(t) fällt für eine Zeitspanne von einem vorgegebenen Maximalwert aₘₐₓ zwischen dem dem Zeitpunkt tₐ des jeweiligen Ereignisses und einem Endzeitpunkt t_{c} mit linearem Verlauf auf den Neutralwert 0. Nach Ablauf dieser Zeitspanne ist sie konstant und hat den Neutralwert 0.
Eine dritte Art von Abklingfunktion a₃(t) fällt von einem vorgegebenen Maximalwert aₘₐₓ exponentiell ab und weist zum Endzeitpunkt t_{c} einen Wert a₃(t_{c}) auf, der schon beinahe beim Neutralwert 0 liegt, beispielsweise ist a₃(tₐ)/a₃(t_{c})<0,01. Die Abklingfunktion erreicht jedoch niemals exakt den Neutralwert 0.

Sofern anstelle eines Aufnahmezeitpunkts t_{a,1}, t_{a,2}, t_{a,3}, t_{a,4} eine Aufnahmezeitspanne festgelegt wird, kann das Abklingverhalten auch durch die Dauer der betreffenden Aufnahmezeitspanne abgewandelt werden. Beispielsweise kann der Zeitabstand zwischen den Zeitpunkten tₐ und t_{c} der Abklingfunktion durch die Dauer der Aufnahmezeitspanne festgelegt werden.

Grundsätzlich ist es möglich, dass die Funktion für einen bestimmten Zeitbereich nach dem Zeitpunkt tₐ des Ereignisses E₁, E₂, E₃, E₄ auch ansteigt. Nach diesem Zeitbereich konvergiert die Funktion jedoch monoton gegen den Neutralwert 0.

In **Fig. 2** sind insgesamt vier Ereignisse E₁, E₂, E₃, E₄ dargestellt, wobei für jedes der Ereignisse jeweils ein Ereigniszeitpunkt t_{a,1}, t_{a,3} oder eine Ereigniszeitspanne t_{a,2}, t_{a,4} zugewiesen ist. Dem betreffenden Ereignis sind Intensitätswerte zugewiesen, die in den eingekreisten Bereichen einen vom Neutralwert 0 verschiedenen Wert aufweisen. Weiters ist den beiden Ereignissen E₂ und E₄ der ersten Ereigniskarte C₁ jeweils eine Abklingfunktion mit Rechteckverlauf zugeordnet, den beiden Ereignissen E₁ und E₃ der zweiten Ereigniskarte C₂ ist jeweils eine Abklingfunktion mit exponentiellem Abklingverlauf zugeordnet.

Auch wenn dies grundsätzlich nicht zwingend geboten ist, wurde bei dem in **Fig. 2** dargestellten Ausführungsbeispiel für alle Ereignisse E₂, E₄ der ersten Ereigniskarte C₁ jeweils die gleiche rechteckförmige Abklingfunktion verwendet, für alle Ereignisse E₁, E₃ der zweiten Ereigniskarte C₂ jeweils die gleiche exponentielle Abklingfunktion.

### Akkumulation

Im vorliegenden Fall werden knotenweise Ereigniswerte gebildet, indem die einzelnen Intensitätswerte, vom selben Knoten der Ereigniskarte C₁, C₂ mit einer vorgegebenen Akkumulationsvorschrift gewichtet akkumuliert werden und derart der Ereigniswert ermittelt wird.

Dies wird für den Knoten M_{z} unter Verweis auf **Fig. 4a** und **Fig. 4b** näher dargestellt, bei denen zunächst für die einzelnen dem Knoten M_{z} zugeordneten Knoten Nₓ, N_{y} der Ereigniskarten C₁, C₂ jeweils eine Akkumulation der betreffenden Ereigniswerte I, jeweils gewichtet mit der Abklingfunktion vorgenommen wird.

Dabei werden die einzelnen Intensitätswerte aller Ereignisse E₂, E₄ betreffend denjenigen Knoten Nₓ der ersten Ereigniskarte C₁, die aufgrund der Abbildung T₁ auf den betreffenden Knoten M_{z} abgebildet oder für eine Interpolation herangezogen wurden, mit einer Akkumulationsvorschrift gewichtet akkumuliert. Das Ergebnis dieser Akkumulation ist in **Fig. 4a** näher dargestellt.

Ebenso werden die einzelnen Intensitätswerte der Ereignisse E₁, E₃ betreffend denjenigen Knoten N_{y} der zweiten Ereigniskarte C₂, die aufgrund der Abbildung T₂ auf den betreffenden Knoten M_{z} abgebildet oder für eine Interpolation herangezogen wurden, mit einer Akkumulationsvorschrift gewichtet akkumuliert. Das Ergebnis dieser Akkumulation ist in **Fig. 4b** näher dargestellt.

Die einzelnen Intensitätswerte werden jeweils mit einem Wert gewichtet, der dem Ergebnis der Anwendung der jeweiligen Abklingfunktion a(t) des jeweiligen Ereignisses auf die Zeitspanne t_{d}-tₐ zwischen dem Detektionszeitpunkt t_{d} und dem Aufnahmezeitpunkt tₐ = t_{a,1}, t_{a,2}, t_{a,3}, t_{a,4} oder der Aufnahmezeitspanne des Ereignisses E₁, E₂, E₃, E₄ entspricht.

Im vorliegenden Fall wird als Akkumulationsvorschrift eine einfache Addition der jeweiligen Werte verwendet. Die Akkumulationsvorschrift legt grundsätzlich auch den bei den Abklingfunktionen verwendeten Neutralwert fest. Da als Akkumulationsvorschrift die, allenfalls gewichtete, Addition verwendet wird, wird in diesem bevorzugten Abführungsbeispiel als Neutralwert der Wert Null (0) verwendet, der hinsichtlich der Addition das neutrale Element darstellt und das Ergebnis einer Akkumulation nicht verändert. Sofern als Akkumulationsvorschrift die Multiplikation verwendet wird, wird als Neutralwert der Wert (1) verwendet, der hinsichtlich der Multiplikation das neutrale Element darstellt und das Ergebnis einer Akkumulation nicht verändert.

Im vorliegenden Fall läuft die Akkumulation bei der Bestimmung der Ereigniswerte V_{z} zweistufig ab. Zunächst wurden ja, wie bereits erwähnt, für alle Knoten Nₓ, N_{y} der Ereigniskarten C₁, C₂ knotenweise Ereigniswerte V_{z} gebildet, indem die einzelnen Intensitätswerte vom selben Knoten der Ereigniskarte mit einer vorgegebenen Akkumulationsvorschrift gewichtet akkumuliert wurden und derart der Ereigniswert für die Knoten Nₓ, N_{y} der Ereigniskarten C₁, C₂ ermittelt wurde. Die Intensitätswerte I wurden jeweils mit einem Wert gewichtet, der dem Ergebnis der Anwendung der Abklingfunktion auf die Zeitspanne t_{d}-tₐ zwischen dem Aufnahmezeitpunkt tₐ = t_{a,1}, t_{a,2}, t_{a,3}, t_{a,4} oder der Aufnahmezeitspanne des Ereignisses E₁, E₂, E₃, E₄ und dem Detektionszeitpunkt t_{d} entspricht.

In einem zweiten Schritt (**Fig. 3**) werden die einzelnen Ereigniswerte V_{z} von denjenigen Knoten der Ereigniskarte C₁, C₂, die aufgrund der Abbildung T₁, T₂ auf den betreffenden Knoten M_{z} der gemeinsamen Karte C abgebildet oder für eine Interpolation herangezogen wurden, mit derselben Akkumulationsvorschrift, namentlich durch Addition, akkumuliert und derart ein Ereigniswert V_{z} für den Knoten M_{z} der gemeinsamen Karte C ermittelt.

Dieses Vorgehen hat den wesentlichen Vorteil, dass nahezu beliebige Abklingfunktionen und Abklingverhalten von Ereignissen eingesetzt und individuell an den betreffenden Anwendungsfall angepasst werden können.

Wurden die einzelnen Ereigniswerte V_{z} ermittelt, kann für den Fall, dass einer oder mehrere der Ereigniswerte V_{z} in der gemeinsamen Karte C einen vorgegebenen Schwellenwert Th übersteigen, ein kritisches Ereignis EK im betreffenden Knoten M_{z} der gemeinsamen Karte C sowie in dem diesem Knoten M_{z} zugeordneten Bereich im Messbereich eines der Sensoren S₁, S₂ festgestellt werden.

Im vorliegenden Fall wurde beispielsweise zum Zeitpunkt t_{a,1} mit der Kamera S₂ eine Menschenansammlung II detektiert. Weiters wurde zu einem kurz späterfolgenden Zeitpunkt t_{a,2} lautes Schreien von den Mikrophonpaaren S₁ wahrgenommen.

Der von den beiden Ereignissen in Bezug auf den Knoten M_{z} festgestellte Verlauf des Ereigniswerts ist in **Fig. 3** dargestellt. Hier zeigt sich, dass das knappe zeitliche Aufeinanderfolgen von unterschiedlichen Ereignissen zu einer Überschreitung des Schwellenwerts Th durch den Ereigniswert V_{z} geführt hat, wodurch ein kritisches Ereignis EK festgestellt wurde.

### Beschränkung der Berechnung auf Ereignisse innerhalb einer Zeitspanne

Bei einer bevorzugten Ausführungsform der Erfindung ist es einfach möglich, die Anzahl der Akkumulationsschritte, die für die Bildung des Ereigniswerts herangezogen werden, zu reduzieren. Werden für alle verwendeten Ereignisse Abklingfunktionen verwendet, die eine maximale Abklingzeit t_{c} haben, ab dem der Funktionswert der Abklinfunktion dem Neutralwert 0 entspricht, so reicht es aus, für die Akkumulation ausschließlich Ereignisse E₁, E₂, E₃, E₄ heranzuziehen, deren Aufnahmezeitpunkt tₐ oder Aufnahmezeitspanne weniger als diese Abklingzeit t_{c} vor dem Detektionszeitpunkt t_{d} liegt. Dabei ist es nicht erforderlich, für alle Ereignisse dieselbe Abklingfunktion zu verwenden, solange sichergestellt ist, dass es eine maximale Abklingzeit t_{c} gibt, nach der sämtliche Abklingfunktionen den Neutralwert aufweisen.

### Globales Exponentielles Abklingen

Bei einer weiteren bevorzugten Ausführungsform der Erfindung wird allen dieselbe exponentielle Abklingfunktion a₃(t) zugewiesen, die nach der Zeit mit einer vorgegebenen Halbwertszeit exponentiell abklingt. Unter dieser Voraussetzung brauchen bei der laufenden Bildung der Ereigniswerte V_{z} überhaupt keine in der Vergangenheit aufgetretenen Intensitätswerte abgespeichert werden. Da sämtliche Intensitätswerte mit derselben Halbwertszeit abklingen, kann für die einzelnen Knoten der gemeinsamen Karte C jeweils ein einziger Ereigniswert V_{z} bestimmt werden, der entsprechend der Abklingfunktion abklingt. Sofern ein Ereignis mit einem Intensitätswert in einem Knoten einer Ereigniskarte C₁, C₂ detektiert wird, wird der Ereigniswert V_{z} des oder der betreffenden Knoten M_{z} der gemeinsamen Karte C um den Intensitätswert oder einen durch Interpolation des Intensitätswerts entsprechender Wert erhöht.

### Abschneiden des Werts

Insbesondere bei der Verwendung eines einheitlichen exponentiellen Abklingverhaltens, aber prinzipiell auch unabhängig davon, besteht auch die Möglichkeit, dass nicht die Intensitätswerte der Ereignisse E₁, E₂, E₃, E₄ im betreffenden Knoten Nₓ der Ereigniskarte C₁, sondern davon abgeleitete Werte J für die Akkumulation herangezogen werden. Dies ist beispielsweise bei dem in **Fig. 6** dargestellten Beispiel der Fall, bei dem für den Fall der Überschreitung des Schwellenwerts der Intensitätswert I₃ nicht voll, sondern lediglich mit seinem Beitrag J₃ bis zur Schwellenwertüberschreitung in die Akkumulation eingeht.

In diesem Fall werden nicht die Intensitätswerte I selbst, sondern die Beiträge J, die die Intensitätswerte I der Ereignisse E₁, E₂, E₃, E₄ zur Akkumulation liefern, jeweils mit einem Wert gewichtet, der dem Ergebnis der Anwendung der jeweiligen Abklingfunktion des jeweiligen Ereignisses auf die Zeitspanne t_{d}-tₐ zwischen dem Detektionszeitpunkt t_{d} und dem Aufnahmezeitpunkt tₐ oder der Aufnahmezeitspanne des Ereignisses E₁, E₂, E₃, E₄ entspricht.

### Ausklammern oder Unterschiedliches Behandeln von Bereichen

Grundsätzlich brauchen die vorstehend genannten Verfahren nicht auf die gesamte gemeinsame Karte C angewendet werden. Sofern für bestimmte Bereiche das Auftreten eines kritischen Ereignisses EK ausgeschlossen werden kann, brauchen manche Bereiche der gemeinsamen Karte C überhaupt nicht behandelt werden. Dies kann die numerische Bestimmung kritischer Ereignisse in den relevanten Bereichen erheblich beschleunigen.

Darüber hinaus ist es auch möglich, einzelne Bereiche unterschiedlich zu behandeln, beispielsweise für einzelne Knoten M_{z} oder Teilmengen von Knoten der gemeinsamen Karte C oder der Ereigniskarten jeweils unterschiedliche Akkumulationsvorschriften oder unterschiedliche Schwellenwerte Th vorzugeben.

### Detektion von Bewegungspfaden

Weiters können auch Pfade, die von Personen häufiger genutzt werden, mit erhöhter Sensitivität betrachtet werden. Für die Erstellung einer der Ereigniskarten C₁, C₂ wird dabei ein (nicht dargestellter) Sensor zur Verfolgung von Personen oder Gegenständen verwendet. Sofern sich eine Person entlang eines Pfads auf der Ereigniskarte bewegt hat und dies detektiert wurde, kann ein Ereignis mit einer sehr langen Abklingdauer festgestellt werden, für das auf dem gesamten Bewegungspfad jeweils ein vorgegebener Intensitätswert gesetzt wird.

Wird dieser Pfad häufiger genutzt, so ist der zusätzliche für das Vorliegen eines kritischen Ereignisses EK erforderliche Ereigniswert V_{z} von anderen Ereignissen E₁, E₂, E₃, E₄ geringer, dh Ereignisse auf dem Pfad werden entsprechend stärker gewichtet.

Alternativ oder zusätzlich besteht auch die Möglichkeit, dass Pfade, die von Personen häufiger genommen werden erkannt werden und für die dem Pfad zugeordneten Knoten der gemeinsamen Karte der Schwellenwert Th entsprechend verringert wird.

## Patentansprüche

1. Verfahren zur Detektion von zu einem bestimmten Detektionszeitpunkt (t_{d}) auftretenden sicherheitskritischen Ereignissen (EK) an zu überwachenden Bereichen auf öffentlichen Plätzen,
a) wobei mit einzelnen Sensoren (S₁, S₂) Sensormesswerte (m₁, m₂) ermittelt werden, und mehrere Ereigniskarten (C₁, C₂) mit jeweils einer Anzahl von Knoten (Nₓ, N_{y}) erstellt werden, wobei jeder der Knoten (Nₓ, N_{y}) oder eine Vielzahl der Knoten (Nₓ, N_{y}) zumindest einer Ereigniskarte (C₁, C₂) einem Bereich im Messbereich zumindest eines der Sensoren (S₁, S₂) zugeordnet ist,
b) wobei eine gemeinsame Karte (C) mit einer Anzahl von Knoten (M_{z}) vorgegeben wird, wobei jeder der Knoten (M_{z}) oder eine Vielzahl der Knoten der gemeinsamen Karte (C) einem Bereich im Messbereich zumindest eines der Sensoren (S₁, S₂) zugeordnet ist, wobei die Knoten (M_{z}, Nₓ, N_{y}) der gemeinsamen Karte (C) oder der Ereigniskarten (C₁, C₂) rasterförmig, insbesondere in einem Raster mit Zeilen und Spalten, angeordnet werden,
c) wobei vorab für jede der einzelnen Ereigniskarten (C₁, C₂) jeweils eine Abbildung (T₁, T₂) auf die gemeinsame Karte (C) vorgegeben wird,
die insbesondere Messwerte (m₁, m₂) betreffend denselben Messbereich auf dieselben Knoten (M_{z}) der gemeinsamen Karte (C) abbildet, und/oder Messwerte betreffend benachbarte Messbereiche auf benachbarte Knoten der gemeinsamen Karte (C) abbildet
d) wobei für eine Vielzahl von Aufnahmezeitpunkten (tₐ; t_{a,1}, t_{a,2}, t_{a,3}, t_{a,4}) oder Aufnahmezeitspannen jeweils aufgrund der ermittelten Sensormesswerte (m₁, m₂) eines oder mehrerer Sensoren (S₁, S₂) nach vorgegebenen Kriterien Ereignisse (E₁, E₂, E₃, E₄) erstellt werden, wobei im Falle der Erstellung eines Ereignisses (E₁, E₂, E₃, E₄) ermittelt oder festgelegt wird,
- der Aufnahmezeitpunkt (tₐ) oder eine Aufnahmezeitspanne
- für jeden Knoten (Nₓ, N_{y}) der Ereigniskarte (C₁, C₂) ein dem Ereignis (E₁, E₂, E₃, E₄) zugeordneter Intensitätswert (I),
- eine Abklingfunktion (a₁(t); a₂(t); a₃(t)) zur Festlegung eines zeitlichen Abklingverhaltens aufgrund der Art des Ereignisses (E₁, E₂, E₃, E₄), wobei die Abklingfunktion bei Überschreitung einer vorgegebenen Zeitspanne (tₐ) einen vorgegebenen Neutralwert (0) aufweist oder gegen diesen Neutralwert (0) konvergiert,
e) wobei für den Detektionszeitpunkt (t_{d}) sowie für eine Anzahl von Knoten (M_{z}) der gemeinsamen Karte (C) knotenweise ein Ereigniswert (V_{z}) bestimmt wird, indem die einzelnen Intensitätswerte (I) aller Ereignisse (E₁, E₂, E₃, E₄) betreffend denjenigen Knoten (Nₓ, N_{y}) der Ereigniskarte (C₁, C₂), die aufgrund der Abbildung (T₁, T₂) auf den betreffenden Knoten (M_{z}) der gemeinsamen Karte (C) abgebildet oder für eine Interpolation herangezogen werden, oder von diesen Werten abgeleitete Beiträge (J) mit einer Akkumulationsvorschrift gewichtet akkumuliert werden, bei der die Akkumulation des Neutralwerts (0) keinen Beitrag zum Akkumulationsergebnis liefert, und derart der Ereigniswert (V_{z}) für den betreffenden Detektionszeitpunkt (t_{d}) ermittelt wird,
f) wobei die Intensitätswerte (I) oder die Beiträge (J), die die Intensitätswerte (I) von Ereignissen zur Akkumulation liefern, bei der Erstellung des Ereigniswerts (V_{z}) im Zuge der Akkumulation jeweils mit einem Wert gewichtet werden, der dem Ergebnis der Anwendung der Abklingfunktion des jeweiligen Ereignisses auf die Zeitspanne (t_{d}-tₐ) zwischen dem Detektionszeitpunkt (t_{d}) und dem Aufnahmezeitpunkt (tₐ) oder einem Zeitpunkt innerhalb der Aufnahmezeitspanne des Ereignisses (E₁, E₂, E₃, E₄) entspricht, und
g) wobei für den Fall, dass ein Ereigniswert (V_{z}) in der gemeinsamen Karte (C) einen vorgegebenen Schwellenwert (Th) übersteigt, ein kritisches Ereignis (EK) im betreffenden Knoten (M_{z}) der gemeinsamen Karte (C) sowie in dem diesem Knoten (M_{z}) zugeordneten Bereich im Messbereich eines der Sensoren (S₁, S₂) festgestellt wird, und
wobei
- für einzelne Knoten (M_{z}, Nₓ, N_{y}) der Ereigniskarten (C₁, C₂) jeweils unterschiedliche Schwellenwerte (Th) vorgegeben werden und
- mehrere Ereigniskarten (C₁, C₂) überlappend ausgebildet sind, sodass zumindest zwei Knoten (Nₓ, N_{y}) von zwei unterschiedlichen Ereigniskarten (C₁, C₂) jeweils auf denselben Knoten (M_{z}) der gemeinsamen Karte (C) abgebildet werden.

2. Verfahren nach Anspruch 1, **dadurch gekennzeichnet, dass** für alle Ereignisse (E₁, E₂, E₃, E₄) derselben Ereigniskarte (C₁, C₂) jeweils die gleiche Abklingfunktion (a₁(t); a₂(t); a₃(t)) verwendet wird, wobei insbesondere für unterschiedliche Ereigniskarten (C₁, C₂) untereinander unterschiedliche Abklingfunktionen (a₁(t); a₂(t); a₃(t)) verwendet werden.

3. Verfahren nach Anspruch 1 oder 2, **dadurch gekennzeichnet, dass** in einem ersten Schritt
- für alle Knoten (Nₓ, N_{y}) der Ereigniskarten (C₁, C₂) knotenweise Ereigniswerte (V_{z}) gebildet werden, indem die einzelnen Intensitätswerte (I) vom selben Knoten (Nₓ, N_{y}) der Ereigniskarte (C₁, C₂) mit einer vorgegebenen Akkumulationsvorschrift gewichtet akkumuliert werden und derart der Ereigniswert (V_{z}) ermittelt wird,
- die Intensitätswerte (I) jeweils mit einem Wert gewichtet werden, der dem Ergebnis der Anwendung der Abklingfunktion auf die Zeitspanne (t_{d}-tₐ) zwischen dem Aufnahmezeitpunkt (tₐ) oder der Aufnahmezeitspanne des Ereignisses (E₁, E₂, E₃, E₄) und dem Detektionszeitpunkt (t_{d}) entspricht,
und in einem zweiten Schritt die einzelnen Ereigniswerte (V_{z}) von denjenigen Knoten (Nₓ, N_{y}) der Ereigniskarte (C₁, C₂), die aufgrund der Abbildung auf den betreffenden Knoten (M_{z}) der gemeinsamen Karte (C) abgebildet oder für eine Interpolation herangezogen werden, mit derselben Akkumulationsvorschrift gewichtet akkumuliert werden und derart der Ereigniswert (V_{z}) ermittelt wird.

4. Verfahren nach einem der vorangehenden Ansprüche, **dadurch gekennzeichnet, dass** jede Ereigniskarte (C₁, C₂) jeweils in zumindest einem Knoten (Nₓ) mit einer anderen Ereigniskarte (C₁, C₂) überlappt, sodass für jede Ereigniskarte (C₁, C₂) zumindest ein Knoten (N_{y}) besteht, der auf den selben Knoten (M_{z}) der gemeinsamen Karte (C) abgebildet ist, wie zumindest ein Knoten (N_{y}) einer anderen Ereigniskarte (C₂).

5. Verfahren nach einem der vorangehenden Ansprüche, **dadurch gekennzeichnet, dass** die Sensormesswerte (m₁, m₂) zumindest eines Sensors (S₁, S₂) bei der Bildung einer Mehrzahl von Ereigniskarten (C₁, C₂) herangezogen werden.

6. Verfahren nach einem der vorangehenden Ansprüche, **dadurch gekennzeichnet, dass** als Abklingfunktion (a₁(t); a₂(t); a₃(t)) eine Funktion verwendet wird,
- die für eine vorgegebene Zeitspanne (t_{c}) nach dem Aufnahmezeitpunkt (tₐ) oder der Aufnahmezeitspanne einen vorgegebenen Wert (a_{c}) aufweist und daran anschließend den Neutralwert (0) aufweist, und/oder
- für eine vorgegebene Zeitspanne (t_{c}) nach dem Aufnahmezeitpunkt (tₐ) oder der Aufnahmezeitspanne einen ausgehend von einem vorgegebenen Maximalwert (aₘₐₓ) monoton, insbesondere linear, abfallenden Wert aufweist und daran anschließend den Neutralwert (0) aufweist, und/oder
- nach dem Aufnahmezeitpunkt (tₐ) oder der Aufnahmezeitspanne einen ausgehend von einem vorgegebenen Maximalwert (aₘₐₓ) monoton exponentiell abfallenden Wert aufweist, der gegen den Neutralwert (0) konvergiert.

7. Verfahren nach einem der vorangehenden Ansprüche, **dadurch gekennzeichnet, dass** für alle die Abklingfunktionen (a₁(t)) eine maximale Abklingzeit (t_{c}) vorgegeben wird, nach der der Wert der Abklingfunktionen (a₁(t_{c})) dem Neutralwert (0) entspricht, und/oder dass für die Akkumulation ausschließlich Ereignisse (E₁, E₂, E₃, E₄) herangezogen werden, deren Aufnahmezeitpunkt (tₐ) oder Aufnahmezeitspanne weniger als diese Abklingzeit vor dem Detektionszeitpunkt (t_{d}) liegt.

8. Verfahren nach einem der vorangehenden Ansprüche, **dadurch gekennzeichnet, dass** bei Vorliegen eines Ereignisses den Knoten (Nₓ, N_{y}) einer Ereigniskarte (C₁, C₂) jeweils ein Intensitätswert (I) zugeordnet wird, wobei diese Intensitätswerte (I) entsprechend der jeweiligen Transformation (T₁, T₂) zu den Ereigniswerten (V_{z}) der betreffenden Knoten (M_{z}) der gemeinsame Ereigniskarte (C) hinzugezählt werden, wobei die Ereigniswerte auf der gemeinsamen Ereigniskarte (C) nach der Zeit mit einer vorgegebenen Halbwertszeit exponentiell abfallen oder abklingen.

9. Verfahren nach einem der vorangehenden Ansprüche, **dadurch gekennzeichnet, dass** in Schritt a) wobei jeder der Knoten (Nₓ, N_{y}) oder eine Vielzahl der Knoten (Nₓ, N_{y}) zumindest einer Ereigniskarte (C₁, C₂) einem Bereich im Messbereich zumindest eines der Sensoren (S₁, S₂) zugeordnet ist, indem
i) zumindest eine erste Ereigniskarte ausgehend von den Sensormesswerten von zumindest einem Mikrophonpaar (S₁) oder zwei gemeinsam in vorgegebenem Abstand angeordneten Mikrophonpaaren (S₁) erstellt wird, wobei den Knoten (Nₓ) der ersten Ereigniskarte (C₁) jeweils ein Messwert zugewiesen wird, der der Wahrscheinlichkeit entspricht, dass von der betreffenden Stelle ein Geräusch ausgeht,
ii) zumindest eine zweite Ereigniskarte (C₂) ausgehend von den Sensormesswerten von zumindest einer Kamera oder zwei Kameras (S₂) erstellt wird, wobei den Knoten (N_{y}) dieser zweiten Ereigniskarte (C₂) jeweils ein Messwert zugewiesen wird, der der Wahrscheinlichkeit entspricht, dass sich an der betreffenden Stelle zumindest eine Person befindet.

10. Verfahren nach Anspruch 9, **dadurch gekennzeichnet, dass** in Schritt i) zur Erstellung der zweiten Ereigniskarte (C₂) Wärmebildkameras oder Kameras verwendet werden, die für den sichtbaren Bereich sensitiv sind,
dass für das jeweilige Kamerabild beider Kameras eine Transformation in die zweite Ereigniskarte (C₂) vorgegeben wird, wobei gemeinsame Aufnahmebereiche der Kameras auf gemeinsame Knoten abgebildet werden, und
dass die Ereigniswerte für jeden Knoten mittels eines Bildanalyseverfahrens ermittelt werden, das die Wahrscheinlichkeit des Auftretens einer Person im Kamerabild angibt.

11. Verfahren nach Anspruch 9 oder 10, **dadurch gekennzeichnet, dass** in Schritt ii) aufgrund der Laufzeitunterschiede der von den einander zugeordneten Mikrophonen eine räumliche Lokalisierung der empfangenen Geräusche vorgenommen wird und wobei den Knoten der ersten Ereigniskarte (C₁) jeweils ein Intensitätswert oder Ereigniswert zugewiesen wird, der der Wahrscheinlichkeit entspricht, dass von der betreffenden Stelle ein Geräusch ausgeht.

12. Verfahren nach einem der Ansprüche 9 bis 11, **dadurch gekennzeichnet, dass** für die Erstellung von Ereignissen ein Übereinstimmungsmaß bestimmt wird, das angibt, inwieweit das ermittelte Geräusch mit einem oder mehreren Referenzgeräuschen übereinstimmt oder diesem ähnlich ist und wobei den Knoten (Nₓ, N_{y}) für das betreffende Ereignis (E) jeweils ein Intensitätswert (I) zugewiesen wird, der der Wahrscheinlichkeit entspricht, dass von der betreffenden Stelle ein mit dem Referenzgeräusch übereinstimmendes Geräusch ausgeht,
wobei der Intensitätswert (I) insbesondere mit der Intensität des Geräuschs gewichtet wird, wobei gegebenenfalls die durch den Abstand des dem Knoten zugewiesenen Bereichs zum Mikrophon bewirkte Schwächung des Signals kompensiert wird.

13. Verfahren nach einem der vorangehenden Ansprüche, **dadurch gekennzeichnet, dass** für die Erstellung einer der Ereigniskarten ein Sensor zur Verfolgung von Personen oder Gegenständen verwendet wird, wobei für einzelne Personen ein Pfad in Bezug auf die Ereigniskarte (Cₓ) festgelegt wird und für einzelne Knoten (Nₓ, N_{y}), die sich innerhalb einer Umgebung um den Pfad befinden ein Ereigniswert (V_{z}) vorgegeben oder erhöht wird.

## Claims

1. Method for detecting safety-critical events (EK) occurring at a specific detection time (t_{d}) at areas to be monitored in public places,
a) wherein sensor readings (m₁, m₂) are determined with individual sensors (S₁, S₂), and multiple event maps (C₁, C₂) each with a number of nodes (Nₓ, N_{y}) are created, wherein each of the nodes (Nₓ, N_{y}) or a plurality of the nodes (Nₓ, N_{y}) of at least one event map (C₁, C₂) is assigned to an area in the measurement range of at least one of the sensors (S₁, S₂),
b) wherein a common map (C) with a number of nodes (M_{z}) is predetermined, wherein each of the nodes (M_{z}) or a plurality of the nodes of the common map (C) is assigned to an area in the measuring range of at least one of the sensors (S₁, S₂),
wherein the nodes (M_{z}, Nₓ, N_{y}) of the common map (C) or of the event maps (C₁, C₂) are arranged in a grid, in particular in a grid with rows and columns,
c) wherein a respective mapping (T₁, T₂) onto the common map (C) is predetermined in advance for each of the individual event maps (C₁, C₂),
which in particular maps readings (m₁, m₂) relating to the same measuring range onto the same nodes (M_{z}) of the common map (C), and/or maps readings relating to adjacent measuring ranges onto adjacent nodes of the common map (C)
d) wherein events (E₁, E₂, E₃, E₄) are created for a plurality of recording times (tₐ; t_{a,1}, t_{a,2}, t_{a,3}, t_{a,4}) or recording time intervals in each case on the basis of the determined sensor readings (m₁, m₂) of one or more sensors (S₁, S₂) according to predetermined criteria, wherein in the case of the creation of an event (E₁, E₂, E₃, E₄), the following is determined or established
- the recording time (tₐ) or a recording time interval
- for each node (Nₓ, N_{y}) of the event map (C₁, C₂), an intensity value (I) associated with the event (E₁, E₂, E₃, E₄),
- a decay function (a₁(t); a₂(t); a₃(t)) for establishing a temporal decay behaviour on the basis of the type of event (E₁, E₂, E₃, E₄), wherein when a predetermined time period (tₐ) is exceeded the decay function has a predetermined neutral value (0) or converges towards this neutral value (0),
e) wherein an event value (V_{z}) is determined node-by-node for the detection time (t_{d}) and for a number of nodes (M_{z}) of the common map (C), in that
the individual intensity values (I) of all events (E₁, E₂, E₃, E₄) relating to those nodes (Nₓ, N_{y}) of the event map (C₁, C₂) which on the basis of the mapping (T₁, T₂) onto the nodes (M_{z}) of the common map (C) in question are mapped or are used for an interpolation, or contributions (J) derived from these values are accumulated in a weighted manner with an accumulation rule in which the accumulation of the neutral value (0) makes no contribution to the accumulation result, and in this way the event value (V_{z}) for the detection time (t_{d}) in question is determined,
f) wherein, in the creation of the event value (V_{z}) in the course of the accumulation, the intensity values (I) or the contributions (J) which the intensity values (I) of events provide to the accumulation are each weighted with a value which corresponds to the result of the application of the decay function of the respective event to the time period (t_{d}-tₐ) between the detection time point (t_{d}) and the recording time point (tₐ) or a time point within the recording time interval of the event (E₁, E₂, E₃, E₄), and
g) wherein, in the event that an event value (V_{z}) in the common map (C) exceeds a predetermined threshold value (Th), a critical event (EK) is detected in the node (M_{z}) of the common map (C) in question and in the region associated with this node (M_{z}) in the measuring range of one of the sensors (S₁, S₂), and
wherein
- different threshold values (Th) are predetermined for individual nodes (M_{z}, Nₓ, N_{y}) of the event maps (C₁, C₂), and
- multiple event maps (C₁, C₂) are configured to overlap, so that at least two nodes (Nₓ, N_{y}) of two different event maps (C₁, C₂) are each mapped onto the same node (M_{z}) of the common map (C).

2. Method according to claim 1, **characterised in that** in each case the same decay function (a₁(t); a₂(t); a₃(t)) is used for all events (E₁, E₂, E₃, E₄) of the same event map (C₁, C₂), wherein in particular different decay functions (a₁(t); a₂(t); a₃(t)) are used for event maps (C₁, C₂) differing among one another.

3. Method according to claim 1 or 2,**characterised in that** in a first step
- event values (V_{z}) are formed node-by-node for all nodes (Nₓ, N_{y}) of the event maps (C₁, C₂) by accumulating the individual intensity values (I) from the same node (Nₓ, N_{y}) of the event map (C₁, C₂) weighted with a predetermined accumulation rule and **in that** way determining the event value (V_{z}),
- the intensity values (I) are each weighted with a value which corresponds to the result of the application of the decay function to the time interval (t_{d}-tₐ) between the recording time point (tₐ) or the recording time interval of the event (E₁, E₂, E₃, E₄) and the detection time point (t_{d}),
and in a second step, the individual event values (V_{z}) of those nodes (Nₓ, N_{y}) of the event map (C₁, C₂) which on the basis of the mapping to the node (M_{z}) of the common map (C) in question are mapped or are used for an interpolation are accumulated in a weighted manner with the same accumulation rule and **in that** way the event value (V_{z}) is determined.

4. Method according to any one of the preceding claims, **characterised in that** each event map (C₁, C₂) in each case overlaps in at least one node (Nₓ) with another event map (C₁, C₂), so that for each event map (C₁, C₂) there is at least one node (N_{y}) which is mapped onto the same node (M_{z}) of the common map (C) as at least one node (N_{y}) of another event map (C₂).

5. Method according to any one of the preceding claims, **characterised in that** the sensor readings (m₁, m₂) of at least one sensor (S₁, S₂) are used in the formation of a multiplicity of event maps (C₁, C₂).

6. Method according to any one of the preceding claims, **characterised in that**, as decay function (a₁(t); a₂(t); a₃(t)), a function is used
- which has a predetermined value (a_{c}) for a predetermined time interval (t_{c}) after the recording time (tₐ) or the recording time interval and subsequently has the neutral value (0), and/or
- for a predetermined time interval (t_{c}) after the recording time (tₐ) or the recording time interval has a value which, starting from a predetermined maximum value (aₘₐₓ), has an evenly, in particular linearly, decreasing value and subsequently has the neutral value (0), and/or
- after the recording time (tₐ) or the recording time period has a value which, starting from a predetermined maximum value (aₘₐₓ), has an evenly exponentially decreasing value and converges towards the neutral value (0).

7. Method according to any one of the preceding claims, **characterised in that** a maximum decay time (t_{c}) is predetermined for all the decay functions (a₁(t)), after which the value of the decay functions (a₁(t_{c})) corresponds to the neutral value (0), and/or
**in that** only events (E₁, E₂, E₃, E₄) for which the recording time (tₐ) or recording time interval is less than this decay time before the detection time (t_{d}) are used for the accumulation.

8. Method according to any one of the preceding claims, **characterised in that**, where an event is present, the nodes (Nₓ, N_{y}) of an event map (C₁, C₂) are each assigned an intensity value (I), these intensity values (I) being added to the event values (V_{z}) of the nodes (M_{z}) of the common event map (C) in question in accordance with the respective transformation (T₁, T₂), the event values on the common event map (C) decreasing or decaying exponentially after the time with a predetermined half-life.

9. Method according to any one of the preceding claims, **characterised in that** in step a) wherein each of the nodes (Nₓ, N_{y}) or a plurality of the nodes (Nₓ, N_{y}) of at least one event map (C₁, C₂) is assigned to an area in the measuring range of at least one of the sensors (S₁, S₂), **in that**
i) at least a first event map is created on the basis of the sensor readings of at least one microphone pair (S₁) or two microphone pairs (S₁) arranged at a predetermined mutual separation, wherein the nodes (Nₓ) of the first event map (C₁) are each assigned a reading corresponding to the probability of a noise emanating from the location in question,
ii) at least one second event map (C₂) is created on the basis of the sensor readings from at least one camera or two cameras (S₂), wherein the nodes (N_{y}) of this second event map (C₂) are each assigned a reading corresponding to the probability that at least one person is present at the location in question.

10. Method according to claim 9, **characterised in that** in step i) thermal imaging cameras or cameras which are sensitive to the visible range are used to create the second event map (C₂),
**in that** a transformation into the second event map (C₂) is predetermined for the respective camera image of both cameras, wherein common recording areas of the cameras are mapped onto common nodes, and
**in that** the event values for each node are determined by means of an image analysis method, which indicates the probability of the existence of a person in the camera image.

11. Method according to claim 9 or 10, **characterised in that** in step ii) a spatial localisation of the received noises is performed on the basis of the time-of-arrival differences of the microphones assigned to each other and wherein the nodes of the first event map (C₁) are each assigned an intensity value or event value corresponding to the probability that a noise emanates from the location in question.

12. Method according to any one of claims 9 to 11, **characterised in that**, for the creation of events, a matching level is specified, which indicates the degree to which the determined noise matches or is similar to one or more reference noises, and wherein the nodes (Nₓ, N_{y}) for the event (E) in question are each assigned an intensity value (I) which corresponds to the probability of a noise matching the reference noise emanating from the location in question,
wherein the intensity value (I) is weighted, in particular with the intensity of the noise, wherein, where appropriate, the attenuation of the signal caused by the distance of the region assigned to the node from the microphone is compensated for.

13. Method according to any one of the preceding claims, **characterised in that**, for the creation of one of the event maps, a sensor for tracking persons or objects is used, wherein for individual persons a path is determined with respect to the event map (Cₓ) and for individual nodes (Nₓ, N_{y}) located within a vicinity around the path an event value (V_{z}) is predetermined or increased.

## Revendications

1. Procédé de détection d'événements critiques (EK) survenant à un moment de détection (t_{d}) défini sur des zones à surveiller dans des lieux publics,
a) dans lequel des valeurs de mesure de capteur (m₁, m₂) sont déterminées avec divers capteurs (S₁, S₂), et plusieurs cartes d'événements (C₁, C₂) sont créées avec respectivement un nombre de nœuds (Nₓ, N_{y}), dans lequel chacun des nœuds (Nₓ, N_{y}) ou une pluralité de nœuds (Nₓ, N_{y}) d'au moins une carte d'événements (C₁, C₂) est associé à une zone dans la plage de mesure d'au moins un des capteurs (S₁, S₂),
b) dans lequel une carte commune (C) est spécifiée avec un nombre de nœuds (M_{z}), dans lequel chacun des nœuds (M_{z}) ou une pluralité des nœuds de la carte commune (C) est associé à une plage dans la plage de mesure d'au moins un des capteurs (S₁, S₂),
dans lequel les nœuds (M_{z}, Nₓ, N_{y}) de la carte commune (C) ou des cartes d'événements (C₁, C₂) sont disposés en forme de trame, en particulier en une trame avec des lignes et des colonnes,
c) dans lequel respectivement une reproduction (T₁, T₂) est spécifiée sur la carte commune (C) au préalable pour chacune des diverses cartes d'événements (C₁, C₂),
qui reproduit en particulier des valeurs de mesure (m₁, m₂) concernant la même zone de mesure sur les mêmes nœuds (M_{z}) de la carte commune (C) et/ou reproduit des valeurs de mesure concernant des zones de mesure voisines sur des nœuds voisins de la carte commune (C),
d) dans lequel des événements (E₁, E₂, E₃, E₄) sont créés selon des critères spécifiés pour une pluralité de moments d'enregistrement (tₐ; t_{a,1}, t_{a,2}, t_{a,3}, t_{a,4}) ou périodes d'enregistrement respectivement en raison des valeurs de mesure de capteur (m₁, m₂) déterminées d'un ou de plusieurs capteurs (S₁, S₂), dans lequel sont déterminés ou fixés dans le cas de la création d'un événement (E₁, E₂, E₃, E₄)
- le moment d'enregistrement (tₐ) ou une période d'enregistrement
- une valeur d'intensité (I) associée à l'événement (E₁, E₂, E₃, E₄) pour chaque nœud (Nₓ, N_{y}) de la carte d'événements (C₁, C₂),
- une fonction d'affaiblissement (a₁(t); a₂(t) ; a₃(t)) pour fixer un comportement d'affaiblissement dans le temps en raison du type de l'événement (E₁, E₂, E₃, E₄), dans lequel la fonction d'affaiblissement présente une valeur neutre (0) spécifiée ou converge vers ladite valeur neutre (0) en cas de dépassement d'une période spécifiée (tₐ),
e) dans lequel une valeur d'événement (V_{z}) est définie nœud par nœuds pour le moment de détection (t_{d}) ainsi que pour un nombre de nœuds (M_{z}) de la carte commune (C) en ce
que les diverses valeurs d'intensité (I) de tous les événements (E₁, E₂, E₃, E₄) concernant le nœud (Nₓ, N_{y}) de la carte d'événements (C₁, C₂), qui sont reproduites en raison de la reproduction (T₁, T₂) sur le nœud (M_{z}) concerné de la carte commune (C) ou sont prises en compte pour une interpolation, ou des apports (J) dérivés desdites valeurs sont cumulés de manière pondérée avec une spécification de cumul, où le cumul de la valeur neutre (0) n'offre aucun apport au résultat de cumul et ainsi la valeur d'événement (V_{z}) est déterminée pour le moment de détection (t_{d}) concerné,
f) dans lequel les valeurs d'intensité (I) ou les apports (J), qui offrent les valeurs d'intensité (I) d'événements pour le cumul, sont pondérés lors de la création de la valeur d'événement (V_{z}) dans le cadre du cumul respectivement avec une valeur, qui correspond au résultat de l'application de la fonction d'affaiblissement de l'événement respectif sur la période (t_{d}-tₐ) entre le moment de détection (t_{d}) et le moment d'enregistrement (tₐ) ou à un moment dans la période d'enregistrement de l'événement (E₁, E₂, E₃, E₄), et
g) dans lequel si une valeur d'événement (V_{z}) dépasse dans la carte commune (C) une valeur de seuil (Th) spécifiée, un événement critique (EK) est fixé dans le nœud (M_{z}) concerné de la carte commune (C) ainsi que dans la zone associée audit nœud (M_{z}) dans la zone de mesure d'un des capteurs (S₁, S₂), et
dans lequel
- des valeurs de seuil (Th) respectivement différentes sont spécifiées pour divers nœuds (M_{z}, Nₓ, N_{y}) des cartes d'événements (C₁, C₂) et
- plusieurs cartes d'événements (C₁, C₂) sont réalisées de manière à se chevaucher si bien qu'au moins deux nœuds (Nₓ, N_{y}) de deux cartes d'événements (C₁, C₂) différentes sont reproduits respectivement sur le même nœud (M_{z}) de la carte commune (C).

2. Procédé selon la revendication 1, **caractérisé en ce que** respectivement la même fonction d'affaiblissement (a₁(t) ; a₂(t) ; a₃(t)) est utilisée pour tous les événements (E₁, E₂, E₃, E₄) de la même carte d'événements (C₁, C₂), dans lequel des fonctions d'affaiblissement (a₁(t)) ; a₂(t) ; a₃(t)) différentes les unes des autres sont utilisées en particulier pour des cartes d'événements (C₁, C₂) différentes.

3. Procédé selon la revendication 1 ou 2, **caractérisé en ce que** lors d'une première étape
- des valeurs d'événement (V_{z}) sont obtenues nœud par nœud pour tous les nœuds (Nₓ, N_{y}) des cartes d'événements (C₁, C₂) **en ce que** les diverses valeurs d'intensité (I) du même nœud (Nₓ, N_{y}) de la carte d'événements (C₁, C₂) sont cumulées de manière pondérée avec une spécification de cumul spécifiée et ainsi la valeur d'événement (V_{z}) est déterminée,
- les valeurs d'intensité (I) sont pondérées respectivement avec une valeur, qui correspond au résultat de l'application de la fonction d'affaiblissement sur la période (t_{d}-tₐ) entre le moment d'enregistrement (tₐ) ou la période d'enregistrement de l'événement (E₁, E₂, E₃, E₄) et le moment de détection (t_{d}),
et lors d'une deuxième étape, les diverses valeurs d'événement (V_{z}) des nœuds (Nₓ, N_{y}) de la carte d'événements (C₁, C₂), qui précisément sont reproduites en raison de la reproduction sur le nœud concerné (M_{z}) de la carte commune (C) ou sont prises en compte pour une interpolation, sont cumulées de manière pondérée avec la même spécification de cumul et ainsi la valeur d'événement (V_{z}) est déterminée.

4. Procédé selon l'une quelconque des revendications précédentes, **caractérisé en ce que** chaque carte d'événements (C₁, C₂) chevauche respectivement en au moins un nœud (Nₓ) une autre carte d'événements (C₁, C₂) si bien qu'il existe pour chaque carte d'événements (C₁, C₂) au moins un nœud (N_{y}), qui est reproduit sur le même nœud (M_{z}) de la carte commune (C) qu'au moins un nœud (N_{y}) d'une autre carte d'événements (C₂).

5. Procédé selon l'une quelconque des revendications précédentes, **caractérisé en ce que** les valeurs de mesure de capteur (m₁, m₂) d'au moins un capteur (S₁, S₂) sont prises en compte lors de l'obtention d'une multitude de cartes d'événements (C₁, C₂).

6. Procédé selon l'une quelconque des revendications précédentes, **caractérisé en ce qu'**est utilisée en tant que fonction d'affaiblissement (a₁(t) ; a₂(t) ; a₃(t)) une fonction
- qui présente une valeur spécifiée (a_{c}) et par la suite la valeur neutre (0) pour une période spécifiée (t_{c}) après le moment d'enregistrement (tₐ) ou la période d'enregistrement, et/ou
- qui présente une valeur baissant de manière monotone, en particulier de manière linéaire, en partant d'une valeur maximale spécifiée (aₘₐₓ) et, par la suite, présente la valeur neutre (0) pour une période spécifiée (t_{c}) après le moment d'enregistrement (tₐ) ou la période d'enregistrement, et/ou
- qui présente une valeur baissant de manière exponentielle et monotone à partir d'une valeur maximale spécifiée (aₘₐₓ), qui converge vers la valeur neutre (0), après le moment d'enregistrement (tₐ) ou la période d'enregistrement.

7. Procédé selon l'une quelconque des revendications précédentes, **caractérisé en ce que** pour toutes les fonctions d'affaiblissement (a₁(t)) un temps d'affaiblissement maximal (t_{c}) est spécifié, après lequel la valeur des fonctions d'affaiblissement (a₁(t_{c})) correspond à la valeur neutre (0), et/ou
que pour le cumul exclusivement des événements (E₁, E₂, E₃, E₄) sont pris en compte, dont le moment d'enregistrement (tₐ) ou la période d'enregistrement est inférieur audit temps d'affaiblissement avant le moment de détection (t_{d}).

8. Procédé selon l'une quelconque des revendications précédentes, **caractérisé en ce qu'**en présence d'un événement, respectivement une valeur d'intensité (I) est associée aux nœuds (Nₓ, N_{y}) d'une carte d'événements (C₁, C₂), dans lequel lesdites valeurs d'intensité (I) viennent s'ajouter, conformément à la transformation (T₁, T₂) respective aux valeurs d'événement (V_{z}) des nœuds (M_{z}) concernés de la carte d'événements commune (C), dans lequel les valeurs d'événement baissent ou s'affaiblissent de manière exponentielle sur la carte d'événements commune (C) après le temps avec une demi-vie spécifiée.

9. Procédé selon l'une quelconque des revendications précédentes, **caractérisé en ce que** lors de l'étape a) chacun des nœuds (Nₓ, N_{y}) ou une pluralité de nœuds (Nₓ, N_{y}) d'au moins une carte d'événements (C₁, C₂) est associé à une zone dans la zone de mesure d'au moins un des capteurs (S₁, S₂), **en ce que**
i) au moins une première carte d'événements est créée en partant des valeurs de mesure de capteur d'au moins une paire de microphones (S₁) ou de deux paires de microphones (S₁) disposées ensemble à une distance spécifiée, dans lequel est attribuée aux nœuds (Nₓ) de la première carte d'événements (C₁) respectivement une valeur de mesure, qui correspond à la probabilité qu'un bruit sorte de l'emplacement concerné,
ii) au moins une deuxième carte d'événements (C₂) est créée en partant des valeurs de mesure de capteur d'au moins une caméra ou de deux caméras (S₂), dans lequel est attribuée aux nœuds (N_{y}) de ladite deuxième carte d'événements (C₂) respectivement une valeur de mesure, qui correspond à la probabilité qu'au moins une personne se trouve sur l'emplacement concerné.

10. Procédé selon la revendication 9, **caractérisé en ce que** lors de l'étape i) sont utilisées pour créer la deuxième carte d'événements (C₂) des caméras thermiques ou des caméras qui sont sensibles au domaine visible,
qu'une transformation est spécifiée dans la deuxième carte d'événements (C₂) pour la caméra thermique respective des deux caméras, dans lequel des zones d'enregistrement communes des caméras sont reproduites sur des nœuds communs, et
que les valeurs d'événement sont déterminées pour chaque nœud au moyen d'un procédé d'analyse d'images, qui indique la probabilité de l'apparition d'une personne sur l'image de caméra.

11. Procédé selon la revendication 9 ou 10, **caractérisé en ce que** lors de l'étape ii), une localisation spatiale des bruits reçus est effectuée sur la base des différences de temps de propagation des microphones associés les uns aux autres, et dans lequel est attribuée aux nœuds de la première carte d'événements (C₁) respectivement une valeur d'intensité ou une valeur d'événement, qui correspond à la probabilité qu'un bruit sorte de l'emplacement concerné.

12. Procédé selon l'une quelconque des revendications 9 à 11, **caractérisé en ce qu'**est définie pour la création d'événements une mesure de concordance, qui indique dans quelle mesure le bruit déterminé coïncide à un ou plusieurs bruits de référence ou y est similaire et dans lequel est attribuée aux nœuds (Nₓ, N_{y}) pour l'événement concerné (E) respectivement une valeur d'intensité (I), qui correspond à la probabilité qu'un bruit coïncidant avec le bruit de référence sorte de l'emplacement concerné,
dans lequel la valeur d'intensité (I) est pondérée en particulier avec l'intensité du bruit, dans lequel éventuellement l'affaiblissement du signal provoqué par la distance entre la zone attribuée au nœud et le microphone est compensé.

13. Procédé selon l'une quelconque des revendications précédentes, **caractérisé en ce qu'**un capteur pour suivre des personnes ou des objets est utilisé pour la création d'une des cartes d'événements, dans lequel un trajet est fixé par rapport à la carte d'événements (Cₓ) pour les diverses personnes et une valeur d'événement (V_{z}) est spécifiée ou augmentée pour divers nœuds (Nₓ, N_{y}) qui se trouvent dans une région autour du trajet.
